# EUROPEAN PATENT APPLICATION

(11) **EP 4 436 298 A1**
(43) Date of publication of application: **25.09.2024**
(21) Application number: 22914585.9
(22) Date of filing: 23.12.2022
(51) Int. Cl.: H04W 74/08

(54) **COMMUNICATION METHOD AND COMMUNICATION APPARATUS**

(30) Priority: 27.12.2021 CN 202111616630
(71) Applicant: Huawei Technologies Co., Ltd., Shenzhen, Guangdong 518129 (CN)
(72) Inventor: WANG, Fanfan, Shenzhen, Guangdong 518129 (CN); ZENG, Yu, Shenzhen, Guangdong 518129 (CN); GENG, Tingting, Shenzhen, Guangdong 518129 (CN); ZENG, Qinghai, Shenzhen, Guangdong 518129 (CN)
(74) Representative: Pfenning, Meinig & Partner mbB
(86) International application number: PCT/CN2022/141655
(87) International publication number: WO 2023/125331

(57) **Abstract**

This disclosure provides a communication method and a communication apparatus. The method includes: A communication device receives first information, where the first information indicates process parameter information of at least one time of clear channel assessment of a first node. The communication device sends second information, where the second information indicates a clear channel assessment policy of the first node, the clear channel assessment policy is obtained based on the first information, and the clear channel assessment policy includes detection parameter information of the clear channel assessment. In this way, a probability of accessing a channel by the communication device is increased when communication reliability is met.

## Description

This application claims priority to Chinese Patent Application No. 202111616630.8, filed with the China National Intellectual Property Administration on December 27, 2021 and entitled "COMMUNICATION METHOD AND COMMUNICATION APPARATUS", which is incorporated herein by reference in its entirety.

### TECHNICAL FIELD

This disclosure relates to the communication field, and more specifically, to a communication method and a communication apparatus.

### BACKGROUND

An unlicensed spectrum (unlicensed spectrum) is a public communication resource that can be used without being licensed in wireless communication resources. The unlicensed spectrum is distributed in 2.4 gigahertz (gigahertz, GHz), 5 GHz, 6 GHz, and the like. Compared with a limited licensed frequency band resource, the unlicensed spectrum has advantages such as rich resources and low use costs.

Although the unlicensed spectrum can be used without being licensed, a use rule of the unlicensed spectrum needs to be complied with, so that each communication device can fairly use the unlicensed spectrum resource, to avoid communication interference on the unlicensed spectrum as far as possible. How to improve efficiency of performing communication by using the unlicensed spectrum on the premise that a use rule of the unlicensed spectrum resource is met is a focus of research on unlicensed spectrum based communication.

### SUMMARY

This disclosure provides a communication method and a communication apparatus, to increase a probability of accessing a channel by a communication device when communication reliability is met.

According to a first aspect, a communication method is provided. The method includes: receiving first information, where the first information indicates process parameter information of at least one time of clear channel assessment of a first node; and sending second information, where the second information indicates a clear channel assessment policy of the first node, the clear channel assessment policy is obtained based on the first information, and the clear channel assessment policy includes detection parameter information of the clear channel assessment.

Based on the foregoing solution, a second node can obtain the process parameter information of the clear channel assessment of the first node by using the first information, and provide, for the first node, the clear channel assessment policy obtained based on the first information. In this case, the first node can obtain a clear channel assessment policy suitable for the first node, to increase a probability of accessing a channel when a use rule of an unlicensed spectrum is met and reliability of unlicensed spectrum based communication is met, so that power consumption caused by frequent channel detection failures of the first node can be reduced.

With reference to the first aspect, in some implementations of the first aspect, the method further includes: obtaining the clear channel assessment policy through inference based on the first information.

Optionally, the obtaining the clear channel assessment policy through inference based on the first information includes: inputting the first information into an intelligent model, to obtain the clear channel assessment policy obtained through inference by the intelligent model.

Based on the foregoing solution, an artificial intelligence technology is applied to assisting the first node in selecting a suitable clear channel assessment parameter based on historical data (for example, the process parameter information of the clear channel assessment) of using the unlicensed spectrum by the first node, so that the probability of accessing the channel by the first node can be increased when the use rule of the unlicensed spectrum is met and the reliability of the unlicensed spectrum based communication is met.

With reference to the first aspect, in some implementations of the first aspect, the method further includes: sending the first information to a second node; and receiving the second information from the second node.

Based on the foregoing solution, the first node may be a terminal device, and the method may be performed by an access network node or a relay node. Information transmission is implemented through forwarding by the second node, so that the first node can provide the first information for a network, and obtain the clear channel assessment policy that is provided by the network for the first node and that is suitable for the first node.

With reference to the first aspect, in some implementations of the first aspect, the process parameter information includes one or more of the following parameters:
service priority information of a signal for triggering the clear channel assessment, a manner of the clear channel assessment, channel access priority information, contention window information, detection period information, an energy detection threshold, or detection result information.

Optionally, the contention window information may include but is not limited to one or more parameters of an upper limit value *CW*ₚ of a selected contention window, an initial count value Nᵢₙₜ of a selected counter, or a quantity of detection periods in one time of clear channel assessment.

Optionally, the detection period information may include but is not limited to a length of the detection period and/or a quantity of detection intervals in the detection period.

Optionally, the detection result information includes one or more of the following:
a channel state determined after the clear channel assessment, a quantity or a proportion of detection periods in which a channel is detected to be in a clear state, a quantity or a proportion of detection periods in which a channel is detected to be in a busy state, or an energy value detected in the detection interval.

In an implementation, a type of the parameter specifically included in the process parameter information may be predefined in a protocol. In another implementation, a type of the parameter specifically included in the process parameter information is indicated by the second node to the first node.

Based on the foregoing solution, the first node and the second node reach a consensus on the parameter information of the clear channel assessment policy inferred by the second node, and the second node can obtain a parameter required for inferring the clear channel assessment policy, to infer the intelligent model based on the obtained parameter.

With reference to the first aspect, in some implementations of the first aspect, the clear channel assessment policy includes detection parameter information of clear channel assessment corresponding to service priority information of at least one signal.

With reference to the first aspect, in some implementations of the first aspect, the clear channel assessment policy includes one or more of the following:
service priority information of a signal for triggering the clear channel assessment, a manner of the clear channel assessment, channel access priority information, contention window information, detection period information, or an energy detection threshold.

Based on the foregoing solution, the clear channel assessment policy provided by the second node for the first node includes one or more of the foregoing detection parameters, so that the first node can execute the clear channel assessment policy based on a corresponding detection parameter, to achieve an effect of increasing the probability of accessing the channel.

With reference to the first aspect, in some implementations of the first aspect, the first information further includes transmission quality information, and the transmission quality information indicates quality of data transmitted by the first node on an unlicensed spectrum resource.

Optionally, the transmission quality information indicates one or more of the following:
channel occupancy time of signal transmission, signal quality information, a proportion of signal transmission successes in a reference time period, a proportion of signal transmission failures in a reference time period, a first threshold, or information about a reference time period for assessing signal transmission quality, where
the first threshold is a threshold for assessing the signal transmission quality.

Based on the foregoing solution, the second node obtains the process parameter information of detecting a clear state of a channel of an unlicensed spectrum by the first node. In addition, the second node may further obtain transmission quality information of communication that is performed by the first node by using the unlicensed spectrum, so that the second node can obtain, by using the transmission quality information, a clear channel assessment policy with a higher matching degree, and provide the clear channel assessment policy for the first node.

With reference to the first aspect, in some implementations of the first aspect, the clear channel assessment policy further includes one or more of the following:
information about a reference time period for assessing signal transmission quality, a first threshold, maximum channel occupancy time corresponding to the clear channel assessment, or transmission quality prediction information.

Based on the foregoing solution, the clear channel assessment policy may further include parameter information for assessing transmission quality, so that the first node can assess the transmission quality based on the assessment parameter information, to adjust the clear channel assessment parameter based on the transmission quality, and enable the first node to adaptively adjust the clear channel assessment parameter. The clear channel assessment policy may further include the maximum channel occupancy time corresponding to the clear channel assessment, so that the first node can determine time for which a channel can be occupied after the channel is accessed by using the clear channel assessment policy, to avoid a case of communication interference or violation of the use rule of the unlicensed spectrum that is caused because the occupancy time is exceeded. In addition, the clear channel assessment policy may further include the transmission quality prediction information, so that the first node can select, based on the transmission quality prediction information and a reliability requirement of a to-be-transmitted signal, a clear channel assessment manner that meets the reliability requirement of signal transmission.

With reference to the first aspect, in some implementations of the first aspect, the receiving first information from a first node includes: periodically receiving the first information, where the at least one time of clear channel assessment is clear channel assessment performed by the first node in one periodicity.

Based on the foregoing solution, the second node can periodically obtain the first information, and provide, for the first node, the clear channel assessment policy obtained based on the first information, so that the clear channel assessment policy can be updated in time, and a quantity of cases in which communication reliability is reduced because the clear channel assessment policy is not suitable when a channel changes can be reduced.

According to a second aspect, a communication method is provided. The method includes: sending first information, where the first information indicates process parameter information of at least one time of clear channel assessment of a first node; and receiving second information, where the second information indicates a clear channel assessment policy of the first node, the clear channel assessment policy is obtained based on the first information, and the clear channel assessment policy includes detection parameter information of the clear channel assessment.

With reference to the second aspect, in some implementations of the second aspect, the method further includes: performing clear channel assessment based on the clear channel assessment policy.

With reference to the second aspect, in some implementations of the second aspect, the process parameter information includes one or more of the following parameters:
service priority information of a signal for triggering the clear channel assessment, a manner of the clear channel assessment, channel access priority information, contention window information, detection period information, an energy detection threshold, or detection result information.

With reference to the second aspect, in some implementations of the second aspect, the clear channel assessment policy includes detection parameter information of clear channel assessment corresponding to service priority information of at least one signal.

With reference to the second aspect, in some implementations of the second aspect, the clear channel assessment policy includes one or more of the following:
service priority information of a signal for triggering the clear channel assessment, a manner of the clear channel assessment, channel access priority information, contention window information, detection period information, or an energy detection threshold.

With reference to the second aspect, in some implementations of the second aspect, the first information further includes transmission quality information, and the transmission quality information indicates quality of data transmitted by the first node on an unlicensed spectrum resource.

With reference to the second aspect, in some implementations of the second aspect, the transmission quality information indicates one or more of the following:
channel occupancy time of signal transmission, signal quality information, a proportion of signal transmission successes in a reference time period, a proportion of signal transmission failures in a reference time period, a first threshold, or information about a reference time period for assessing signal transmission quality, where
the first threshold is a threshold for assessing the signal transmission quality.

With reference to the second aspect, in some implementations of the second aspect, the clear channel assessment policy further includes one or more of the following:
information about a reference time period for assessing signal transmission quality, a first threshold, maximum channel occupancy time corresponding to the clear channel assessment, or transmission quality prediction information, where
the first threshold is a threshold for assessing the signal transmission quality.

With reference to the second aspect, in some implementations of the second aspect, the sending the first information includes:
periodically sending the first information, where the at least one time of clear channel assessment is clear channel assessment performed by the first node in one periodicity.

According to a third aspect, a communication method is provided. The method includes: receiving first information, where the first information indicates process parameter information of at least one time of clear channel assessment of a first node; and
training an intelligent model based on the first information.

With reference to the third aspect, in some implementations of the third aspect, the training the intelligent model based on the first information includes: inputting the first information into the intelligent model, to obtain a clear channel assessment policy that is output by the intelligent model; obtaining an updated model parameter of the intelligent model based on the clear channel assessment policy; and updating a parameter of the intelligent model based on the updated model parameter, to obtain an updated intelligent model.

With reference to the third aspect, in some implementations of the third aspect, the obtaining the updated model parameter of the intelligent model based on the clear channel assessment policy includes: obtaining model check information based on the clear channel assessment policy by using a loss function; and if the model check information does not meet a preset condition, obtaining the updated model parameter based on the model check information.

With reference to the third aspect, in some implementations of the third aspect, if the model check information meets the preset condition, a current intelligent model is used as a trained intelligent model.

Optionally, the trained intelligent model may infer the clear channel assessment policy for the first node in actual communication.

According to a fourth aspect, a communication apparatus is provided. In a design, the apparatus may include modules for performing the method/operations/steps/actions described in the first aspect. The module may be a hardware circuit, may be software, or may be implemented by using a combination of a hardware circuit and software. In a design, the apparatus includes a transceiver unit, configured to receive first information, where the first information indicates process parameter information of at least one time of clear channel assessment of a first node. The transceiver unit is further configured to send second information, where the second information indicates a clear channel assessment policy of the first node, the clear channel assessment policy is obtained based on the first information, and the clear channel assessment policy includes detection parameter information of the clear channel assessment.

Optionally, the apparatus further includes a processing unit, configured to obtain the clear channel assessment policy through inference based on the first information.

According to a fifth aspect, a communication apparatus is provided. In a design, the apparatus may include modules for performing the method/operations/steps/actions described in the second aspect. The module may be a hardware circuit, may be software, or may be implemented by using a combination of a hardware circuit and software. In a design, the apparatus includes a transceiver unit, configured to send first information, where the first information indicates process parameter information of at least one time of clear channel assessment of a first node. The transceiver unit is configured to receive second information, where the second information indicates a clear channel assessment policy of the first node, the clear channel assessment policy is obtained based on the first information, and the clear channel assessment policy includes detection parameter information of the clear channel assessment.

Optionally, the apparatus further includes a processing unit, configured to determine a process parameter of the at least one time of channel assessment policy.

According to a sixth aspect, a communication apparatus is provided. In a design, the apparatus may include modules for performing the method/operations/steps/actions described in the third aspect. The module may be a hardware circuit, may be software, or may be implemented by using a combination of a hardware circuit and software. In a design, the apparatus includes: a transceiver unit, configured to receive first information, where the first information indicates process parameter information of at least one time of clear channel assessment of a first node; and a processing unit, configured to train an intelligent model based on the first information.

According to a seventh aspect, a communication apparatus is provided, and includes a processor. The processor may implement the method in any one of the first aspect, the third aspect, and the possible implementations of the first aspect or the third aspect. Optionally, the communication apparatus further includes a memory. The processor is coupled to the memory, and may be configured to execute instructions in the memory, to implement the method in any one of the first aspect, the third aspect, and the possible implementations of the first aspect or the third aspect. Optionally, the communication apparatus further includes a communication interface, and the processor is coupled to the communication interface. In this disclosure, the communication interface may be a transceiver, a pin, a circuit, a bus, a module, or a communication interface of another type. This is not limited.

According to an eighth aspect, a communication apparatus is provided, and includes a processor. The processor may implement the method in any one of the second aspect and the possible implementations of the second aspect. Optionally, the communication apparatus further includes a memory. The processor is coupled to the memory, and may be configured to execute instructions in the memory, to implement the method in any one of the second aspect or the possible implementations of the second aspect. Optionally, the communication apparatus further includes a communication interface, and the processor is coupled to the communication interface.

According to the communication apparatus provided in the seventh aspect or the eighth aspect, in an implementation, when the communication apparatus is a communication device, the communication interface may be a transceiver. Optionally, the transceiver may be a transceiver circuit. In another implementation, when the communication apparatus is a chip configured in a communication device, the communication interface may be an input/output interface.

Optionally, the input/output interface may include an input circuit and an output circuit.

In a specific implementation process, the input circuit may be an input pin, the output circuit may be an output pin, and the processor may be a transistor, a gate circuit, a trigger, various logic circuits, or the like. An input signal received by the input circuit may be received and input by, for example, but not limited to, a receiver, a signal that is output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and various circuits are not limited in this disclosure.

According to a ninth aspect, a computer program product is provided. The computer program product includes a computer program (which may also be referred to as code or instructions). When the computer program is run, a computer is enabled to perform the method in any one of the first aspect to the third aspect and the possible implementations of the first aspect to the third aspect.

According to a tenth aspect, a computer-readable storage medium is provided. The computer-readable storage medium stores a computer program (which may also be referred to as code or instructions). When the computer program is run on a computer, the computer is enabled to perform the method in any one of the first aspect to the third aspect and the possible implementations of the first aspect to the third aspect.

According to an eleventh aspect, a communication system is provided, and includes at least one apparatus configured to implement a method of a terminal and at least one apparatus configured to implement a method of an access network node.

### BRIEF DESCRIPTION OF DRAWINGS

FIG. 1 is a diagram of a communication system according to this disclosure;
FIG. 2 is an example diagram of an application framework of AI in a communication system according to this disclosure;
FIG. 3A to FIG. 3F are diagrams of a network architecture according to this disclosure;
FIG. 4 is a diagram of a communication method according to this disclosure;
FIG. 5 is a schematic flowchart of a clear channel assessment manner 1 according to this disclosure;
FIG. 6 is a diagram of a detection period in a clear channel assessment manner 2 according to this disclosure;
FIG. 7 is a diagram of a detection period in a clear channel assessment manner 3 according to this disclosure;
FIG. 8 is an example diagram of a training process of an intelligent model according to this disclosure;
FIG. 9 is another diagram of a communication method according to this disclosure;
FIG. 10 is still another diagram of a communication method according to this disclosure;
FIG. 11 is a schematic block diagram of an example of a communications apparatus according to an embodiment of this disclosure;
FIG. 12 is a diagram of a structure of an example of a terminal device according to an embodiment of this disclosure; and
FIG. 13 is a diagram of a structure of an example of a network device according to an embodiment of this disclosure.

### DESCRIPTION OF EMBODIMENTS

In this disclosure, at least one (item) may also be described as one (item) or a plurality of (items), and the plurality of (items) may be two (items), three (items), four (items), or more (items). This is not limited. "/" may represent an "or" relationship between associated objects. For example, A/B may represent A or B. "And/or" may indicate that there are three relationships between associated objects. For example, A and/or B may represent the following three cases: Only A exists, both A and B exist, and only B exists, where A and B may be singular or plural. To facilitate description of the technical solutions of this disclosure, a word such as "first", "second", "A", or "B" may be used to distinguish technical features with a same or similar function. The word such as "first", "second", "A", or "B" do not limit a quantity and an execution sequence. In addition, the word such as "first", "second", "A", or "B" does not indicate a definite difference either. A word such as "example" or "for example" is used to represent an example, evidence, or a description. Any design solution described as "example" or "for example" should not be explained as being more preferred or having more advantages than another design solution. The terms such as "example" and "for example" are used to present a related concept in a specific manner for ease of understanding.

The following describes technical solutions of this disclosure with reference to accompanying drawings.

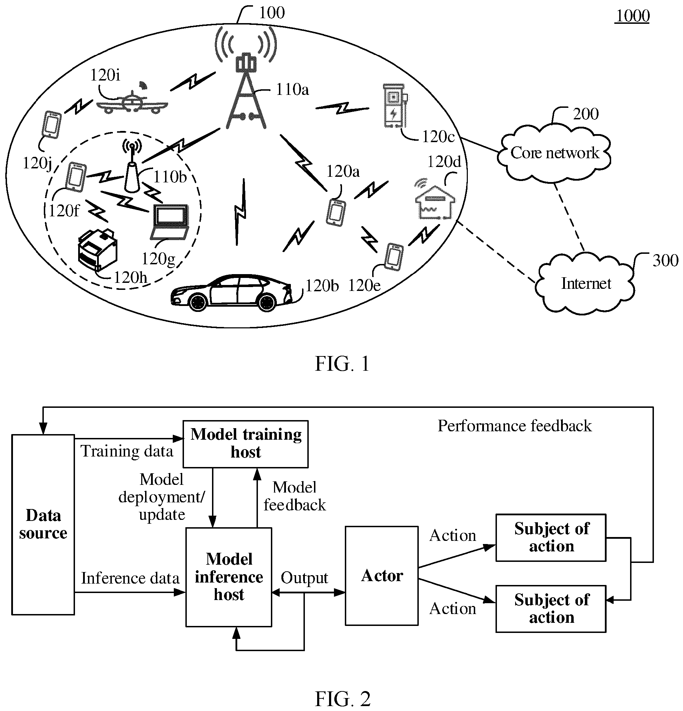

FIG. 1 is a diagram of an architecture of a communication system 1000 to which this disclosure can be applied. As shown in FIG. 1, the communication system includes a radio access network (radio access network, RAN) 100 and a core network (core network, CN) 200. Optionally, the communication system 1000 may further include an Internet 300. The radio access network 100 may include at least one access network device (for example, 110a and 110b in FIG. 1), and may further include at least one terminal (for example, 120a to 120j in FIG. 1). A terminal is connected to an access network device in a wireless manner, and a terminal may perform wireless communication with an access network device by using an unlicensed spectrum resource. A terminal may also be connected to a terminal in a wireless manner, and a terminal may perform wireless communication with a terminal by using an unlicensed spectrum resource. An access network device is connected to the core network in a wireless or wired manner. The core network device and the access network device may be different independent physical devices, or may be a same physical device that integrates functions of the core network device and functions of the access network device. Alternatively, there may be another possible case. For example, one physical device may integrate the functions of the access network device and a part of the functions of the core network device, and another physical device implements a remaining part of the functions of the core network device. Physical existence forms of the core network device and the access network device are not limited in this disclosure. An access network device and an access network device may be connected to each other in a wired or wireless manner. FIG. 1 is only a diagram. The communication system may further include other network devices, for example, a wireless relay device and a wireless backhaul device. The communication device shown in FIG. 1 may perform wireless communication by using an unlicensed spectrum resource. When performing communication by using the unlicensed spectrum resource, the communication device may obtain a clear channel assessment policy by using the communication method provided in this disclosure, and perform clear channel assessment of an unlicensed spectrum based on the obtained clear channel assessment policy.

The access network device may be a base station (base station), a NodeB (NodeB), an evolved NodeB (evolved NodeB, eNodeB, or eNB), a transmission reception point (transmission reception point, TRP), a next generation NodeB (next generation NodeB, gNB) in a 5th generation (5th generation, 5G) mobile communication system, an access network device in an open radio access network (open radio access network, O-RAN or open RAN), a next generation base station in a 6th generation (6th generation, 6G) mobile communication system, a base station in a future mobile communication system, an access node in a wireless fidelity (wireless fidelity, Wi-Fi) system, or the like. Alternatively, the access network device may be a module or a unit that completes a part of functions of a base station, for example, may be a central unit (central unit, CU), a distributed unit (distributed unit, DU), a central unit control plane (CU control plane, CU-CP) module, or a central unit user plane (CU user plane, CU-UP) module. The access network device may be a macro base station (for example, 110a in FIG. 1), or may be a micro base station or an indoor base station (for example, 110b in FIG. 1), or may be a relay node, a donor node, or the like. A specific technology and a specific device form that are used by the access network device are not limited in this disclosure. The 5G system may also be referred to as a new radio (new radio, NR) system. The access network node in this disclosure may be an access network device, or may be a module or a unit disposed in an access network device.

In this disclosure, an apparatus configured to implement a function of the access network device may be an access network device, or may be an apparatus that can support the access network device in implementing the function, for example, a chip system, a hardware circuit, a software module, or a hardware circuit and a software module. The apparatus may be installed in the access network device or may be matched with the access network device for usage. In this disclosure, the chip system may include a chip, or may include a chip and another discrete component. For ease of description, the following describes the technical solutions provided in this disclosure by using an example in which the apparatus configured to implement the function of the access network device is the access network device and the access network device is a base station.

### (1) Protocol layer structure

Communication between an access network device and a terminal complies with a specified protocol layer structure. The protocol layer structure may include a control plane protocol layer structure and a user plane protocol layer structure. For example, the control plane protocol layer structure may include functions of protocol layers such as a radio resource control (radio resource control, RRC) layer, a packet data convergence protocol (packet data convergence protocol, PDCP) layer, a radio link control (radio link control, RLC) layer, a media access control (media access control, MAC) layer, and a physical (physical, PHY) layer. For example, the user plane protocol layer structure may include functions of protocol layers such as a PDCP layer, an RLC layer, a MAC layer, and a physical layer. In a possible implementation, a service data adaptation protocol (service data adaptation protocol, SDAP) layer may be further included above the PDCP layer.

Optionally, the protocol layer structure between the access network device and the terminal may further include an artificial intelligence (artificial intelligence, AI) layer, for transmitting data related to an AI function.

The protocol layer structure between the access network device and the terminal may be considered as an access stratum (access stratum, AS) structure. Optionally, there may further be a non-access stratum (non-access stratum, NAS) above an AS, and is used by the access network device to forward information from the core network device to the terminal, or is used by the access network device to forward information from the terminal to the core network device. In this case, it may be considered that there is a logical interface between the terminal and the core network device. The access network device may forward information between the terminal and the core network device in a transparent transmission manner. For example, NAS signaling may be mapped to or included in RRC signaling, and serve as an element of the RRC signaling.

### (2) Central unit (central unit, CU) and distributed unit (distributed unit, DU)

An access network device may include a CU and a DU. A plurality of DUs may be controlled by one CU in a central manner. For example, an interface between the CU and the DU may be referred to as an F1 interface. A control plane (control plane, CP) interface may be F1-C, and a user plane (user plane, UP) interface may be F1-U. Specific names of interfaces are not limited in this disclosure. The CU and the DU may be classified based on a protocol layer of a wireless network. For example, functions of a PDCP layer and a protocol layer above the PDCP layer (such as an RRC layer and an SDAP layer) are configured in the CU, and functions of a protocol layer below the PDCP layer (such as an RLC layer, a MAC layer, and a PHY layer) are configured in the DU. For another example, functions of a protocol layer above the PDCP layer are configured in the CU, and functions of the PDCP layer and a protocol layer below the PDCP layer are configured in the DU. This is not limited.

Division of processing functions of the CU and the DU based on the protocol layer is merely an example, and the processing functions of the CU and the DU may alternatively be divided in another manner. For example, the CU or the DU may be divided into functions having more protocol layers. For another example, the CU or the DU may be further divided into a part of processing functions having protocol layers. In a design, a part of functions of the RLC layer and functions of protocol layers above the RLC layer are configured on the CU, and remaining functions of the RLC layer and functions of protocol layers below the RLC layer are configured on the DU. In another design, division of functions of the CU or the DU may alternatively be performed based on service types or other system requirements. For example, the division may be performed based on a latency. Functions whose processing time needs to meet a latency requirement are set on the DU, and functions whose processing time does not need to meet the latency requirement are set on the CU. In another design, the CU may alternatively have one or more functions of the core network. For example, the CU may be disposed on a network side to facilitate central management. In another design, a radio unit (radio unit, RU) of the DU is disposed remotely. Optionally, the RU may have a radio frequency function.

Optionally, the DU and the RU may be divided at a PHY layer. For example, the DU may implement higher-layer functions in the PHY layer, and the RU may implement lower-layer functions in the PHY layer. When the PHY layer is used for sending, functions of the PHY layer may include at least one of the following functions: cyclic redundancy check (cyclic redundancy check, CRC) bit addition, channel coding, rate matching, scrambling, modulation, layer mapping, precoding, resource mapping, physical antenna mapping, or radio frequency sending. When the PHY layer is used for receiving, functions of the PHY layer may include at least one of the following: CRC check, channel decoding, rate de-matching, descrambling, demodulation, layer demapping, channel detection, resource demapping, physical antenna demapping, or radio frequency receiving. The higher-layer functions of the PHY layer may include a part of functions of the PHY layer. The part of functions are closer to the MAC layer. The lower-layer functions of the PHY layer may include another part of functions of the PHY layer. For example, the part of functions are closer to the radio frequency receiving function. For example, the higher-layer functions of the PHY layer may include CRC bit addition, channel coding, rate matching, scrambling, modulation, and layer mapping, and the lower-layer functions of the PHY layer may include precoding, resource mapping, physical antenna mapping, and radio frequency sending functions. Alternatively, the higher-layer functions of the PHY layer may include CRC bit addition, channel coding, rate matching, scrambling, modulation, layer mapping, and precoding. The lower-layer functions of the PHY layer may include resource mapping, physical antenna mapping, and radio frequency sending functions. For example, the higher-layer functions of the PHY layer may include CRC check, channel decoding, rate de-matching, decoding, demodulation, and layer demapping, and the lower-layer functions of the PHY layer may include channel detection, resource demapping, physical antenna demapping, and radio frequency receiving. Alternatively, the higher-layer functions of the PHY layer may include CRC check, channel decoding, rate de-matching, decoding, demodulation, layer demapping, and channel detection, and the lower-layer functions of the PHY layer may include resource demapping, physical antenna demapping, and radio frequency receiving.

Optionally, functions of the CU may be implemented by one entity (or module), or may be implemented by different entities. For example, the functions of the CU may be further divided, and a control plane and a user plane are separated and implemented by using different entities. The separated entities are respectively a control plane CU entity (namely, a CU-CP entity) and a user plane CU entity (namely, a CU-UP entity). The CU-CP entity and the CU-UP entity may be coupled to the DU, to jointly complete functions of the access network device.

Optionally, any one of the DU, the CU, the CU-CP, the CU-UP, and the RU may be a software module, a hardware structure, or a combination of a software module and a hardware structure. This is not limited. Different entities may exist in different forms. This is not limited. For example, the DU, the CU, the CU-CP, and the CU-UP are software modules, and the RU is a hardware structure. For brevity of description, all possible combination forms are not listed herein. These modules and methods performed by these modules also fall within the protection scope of this disclosure.

A terminal may also be referred to as a terminal device, user equipment (user equipment, UE), a mobile station, a mobile terminal, or the like. The terminal may be widely used in various scenarios for communication. For example, the scenario includes but is not limited to at least one of the following scenarios: enhanced mobile broadband (enhanced mobile broadband, eMBB), ultra-reliable low-latency communication (ultra-reliable low-latency communication, URLLC), massive machine-type communication (massive machine-type communication, mMTC), device-to-device (device-to-device, D2D), vehicle-to-everything (vehicle-to-everything, V2X), machine-type communication (machine-type communication, MTC), internet of things (internet of things, IoT), virtual reality, augmented reality, industrial control, self-driving, telemedicine, a smart grid, smart furniture, a smart office, smart wearable, smart transportation, a smart city, and the like. The terminal may be a mobile phone, a tablet computer, a computer with a wireless transceiver function, a wearable device, a vehicle, an uncrewed aerial vehicle, a helicopter, an airplane, a ship, a robot, a robot arm, a smart home device, or the like. A specific technology and a specific device form that are used by the terminal are not limited in this disclosure.

In this disclosure, an apparatus configured to implement a function of the terminal may be a terminal, or may be an apparatus that can support the terminal in implementing the function, for example, a chip system, a hardware circuit, a software module, or a hardware circuit and a software module. The apparatus may be installed in the terminal or may be matched with the terminal for usage. For ease of description, the following describes the technical solutions provided in this disclosure by using an example in which the apparatus configured to implement the function of the terminal is a terminal, and optionally, by using an example in which the terminal is UE.

The base station and/or the terminal may be fixed or movable. The base station and/or the terminal may be deployed on the land, including an indoor or outdoor scenario, and a handheld or vehicle-mounted scenario, may be deployed on the water, or may be deployed on an airplane, a balloon, and an artificial satellite in the air. An environment/scenario in which the base station and the terminal are located is not limited in this disclosure. The base station and the terminal may be deployed in a same environment/scenario or different environments/scenarios. For example, the base station and the terminal are both deployed on the land. Alternatively, the base station is deployed on the land, and the terminal is deployed on the water. Examples are not described one by one.

Roles of the base station and the terminal may be relative. For example, a helicopter or an uncrewed aerial vehicle 120i in FIG. 1 may be configured as a mobile base station. For a terminal 120j that accesses the radio access network 100 through 120i, the terminal 120i is a base station. However, for the base station 110a, 120i is a terminal. In other words, 110a and 120i communicate with each other based on a radio air interface protocol. Alternatively, 110a and 120i communicate with each other based on an interface protocol between base stations. In this case, for 110a, 120i is also a base station. Therefore, both the base station and the terminal may be collectively referred to as communication apparatuses (or communication devices). 110a and 110b in FIG. 1 may be referred to as communication apparatuses having a function of the base station, and 120a to 120j in FIG. 1 may be referred to as communication apparatuses having a function of the terminal.

Communication between the base station and the terminal, between the base stations, and between the terminals may be performed based on a licensed frequency band, may be performed based on an unlicensed spectrum, or may be performed based on both the licensed frequency band and the unlicensed frequency band. Communication may be performed based on a frequency band below 6 gigahertz (gigahertz, GHz), may be performed based on a frequency band above 6 GHz, or may be performed based on the frequency band below 6 GHz and the frequency band above 6 GHz simultaneously. A frequency band resource used for wireless communication is not limited in this disclosure.

In this disclosure, an independent network element (which, for example, is referred to as an AI network element, an AI node, or an AI device) may be introduced into the communication system shown in FIG. 1 to implement an AI-related operation. The AI network element may be directly connected to a base station, or may be indirectly connected to a base station through a third-party network element. Optionally, the third-party network element may be a core network element such as an access and mobility management function (access and mobility management function, AMF) network element or a user plane function (user plane function, UPF) network element. Alternatively, an AI concrete (artificial intelligence concrete, AIC) may be disposed in another network element in the communication system to implement an AI-related operation. The AI concrete may be referred to as an AI module or another name. Optionally, the another network element may be a base station, a core network device, a network management (operation, administration and maintenance, OAM), or the like. In this case, a network element that performs the AI-related operation is a network element with a built-in AI function. Because both the AI network element and the AI concrete implement an AI-related function, for ease of description, the AI network element and the network element with the built-in AI function are collectively referred to as AI units in the following. The OAM is configured to operate, administrate, and/or maintain a core network device (a network management of the core network device), and/or is configured to operate, administrate, and/or maintain an access network device (a network management of the access network device).

Optionally, to match and support AI, the AI concrete may be integrated into a terminal or a terminal chip.

Optionally, in this disclosure, the AI concrete may also be referred to as another name, for example, an AI module or an AI unit, and is mainly configured to implement an AI function (which may also be referred to as an AI-related operation). A specific name of the AI concrete is not limited in this disclosure.

In this disclosure, an AI model is a specific method for implementing the AI function. The AI model represents a mapping relationship between an input and an output of the model. The AI model may be a neural network or another machine learning model. The AI model may be referred to as a model for short. The AI-related operation may include at least one of the following: data collection, model training, model information release, model inference (which may also be referred to as model inference, inference, prediction, or the like), inference result release, or the like.

FIG. 2 is an example diagram of a first application framework of AI in a communication system. In FIG. 2, a data source (data source) is configured to store training data and inference data. A model training host (model training host) analyzes or trains the training data (training data) provided by the data source to obtain an AI model, and deploys the AI model on a model inference host (model inference host). The AI model represents a mapping relationship between an input and an output of the model. Obtaining the AI model through learning by the model training host is equivalent to obtaining the mapping relationship between the input and the output of the model through learning by the model training host by using the training data. The model inference host performs inference by using the AI model and based on the inference data provided by the data source, to obtain an inference result. The method may also be described as follows: The model inference host inputs the inference data into the AI model, and obtains an output by using the AI model. The output is the inference result. The inference result may indicate a configuration parameter used (acted) by a subject of action, and/or an operation performed by the subject of action. The inference result may be planned by an actor (actor) entity in a unified manner, and sent to one or more subjects of action (for example, network elements) for action. Optionally, the model inference host may feed back the inference result of the model inference host to the model training host. This process may be referred to as model feedback. A fed-back parameter is used by the model training host to update the AI model, and an updated AI model is deployed in the model inference host. Optionally, the subject of action may feed back, to the data source, a network parameter collected by the subject of action. This process may be referred to as performance feedback. A fed-back parameter may be used as training data or inference data.

In this disclosure, the application framework shown in FIG. 2 may be deployed in the network element shown in FIG. 1. For example, the application framework in FIG. 2 may be deployed in at least one of the terminal device, the access network device, the core network device, or the independently deployed AI network element (not shown) in FIG. 1. For example, the AI network element (which may be considered as a model training host) may analyze or train training data (training data) provided by the terminal device and/or the access network device, to obtain a model. At least one of the terminal device, the access network device, or the core network device (which may be considered as a model inference host) may perform inference by using the model and the inference data, to obtain an output of the model. The inference data may be provided by the terminal device and/or the access network device. An input of the model includes the inference data, and the output of the model is an inference result corresponding to the model. At least one of the terminal device, the access network device, or the core network device (which may be considered as a subject of action) may perform a corresponding operation based on the inference data and/or the inference result. The model inference host and the subject of action may be the same or may be different. This is not limited.

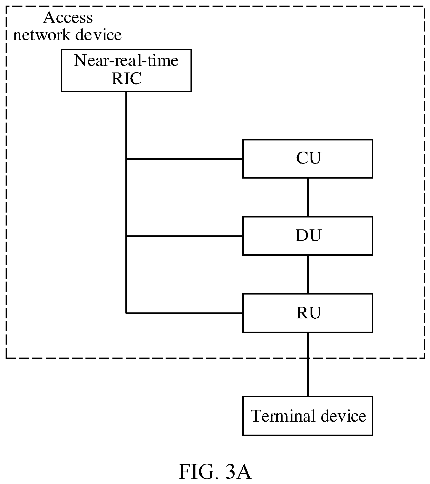

The following describes, with reference to FIG. 3A to FIG. 3D, a network architecture to which communication solutions provided in this disclosure can be applied.

As shown in FIG. 3A, in a first possible implementation, an access network device includes a near-real-time access network intelligent controller (RAN intelligent controller, RIC) module, and is configured to perform model learning and inference. For example, the near-real-time RIC may be configured to train an AI model, and inference is performed by using the AI model. For example, the near-real-time RIC may obtain information on a network side and/or a terminal side from at least one of a CU, a DU, or an RU, where the information may be used as training data or inference data. Optionally, the near-real-time RIC may submit an inference result to at least one of the CU, the DU, or the RU. Optionally, the CU and the DU may exchange the inference result. Optionally, the DU and the RU may exchange the inference result. For example, the near-real-time RIC submits the inference result to the DU, and the DU forwards the inference result to the RU.

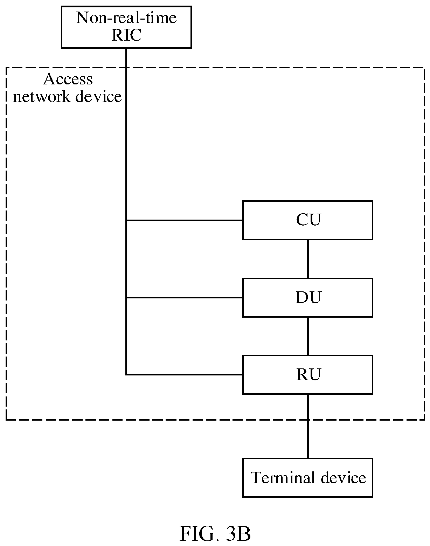

As shown in FIG. 3B, in a second possible implementation, a non-real-time RIC is located outside an access network device (where optionally, the non-real-time RIC may be located in OAM or a core network device), and is configured to perform model learning and inference. For example, the non-real-time RIC is configured to train an AI model, and inference is performed by using the model. For example, the non-real-time RIC may obtain information on a network side and/or a terminal side from at least one of a CU, a DU, or an RU. The information may be used as training data or inference data, and an inference result may be submitted to at least one of the CU, the DU, or the RU. Optionally, the CU and the DU may exchange the inference result. Optionally, the DU and the RU may exchange the inference result. For example, the non-real-time RIC submits the inference result to the DU, and the DU forwards the inference result to the RU.

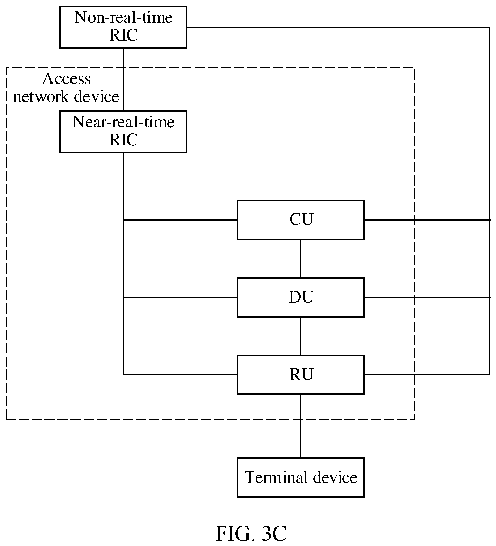

As shown in FIG. 3C, in a third possible implementation, an access network device includes a near-real-time RIC, and a non-real-time RIC is located outside the access network device (where optionally, the non-real-time RIC may be located in OAM or a core network device). Same as the second possible implementation, the non-real-time RIC may be configured to perform model learning and inference; and/or same as the first possible implementation, the near-real-time RIC may be configured to perform model learning and inference; and/or the near-real-time RIC may obtain AI model information from the non-real-time RIC, obtain information on a network side and/or a terminal side from at least one of a CU, a DU, or an RU, and obtain an inference result by using the information and the AI model information. Optionally, the near-real-time RIC may submit the inference result to at least one of the CU, the DU, or the RU. Optionally, the CU and the DU may exchange the inference result. Optionally, the DU and the RU may exchange the inference result. For example, the near-real-time RIC submits the inference result to the DU, and the DU forwards the inference result to the RU. For example, the near-real-time RIC is configured to train a model A, and inference is performed by using the model A. For example, the non-real-time RIC is configured to train a model B, and inference is performed by using the model B. For example, the non-real-time RIC is configured to train a model C, and submit the model C to the near-real-time RIC, and the near-real-time RIC performs inference by using the model C.

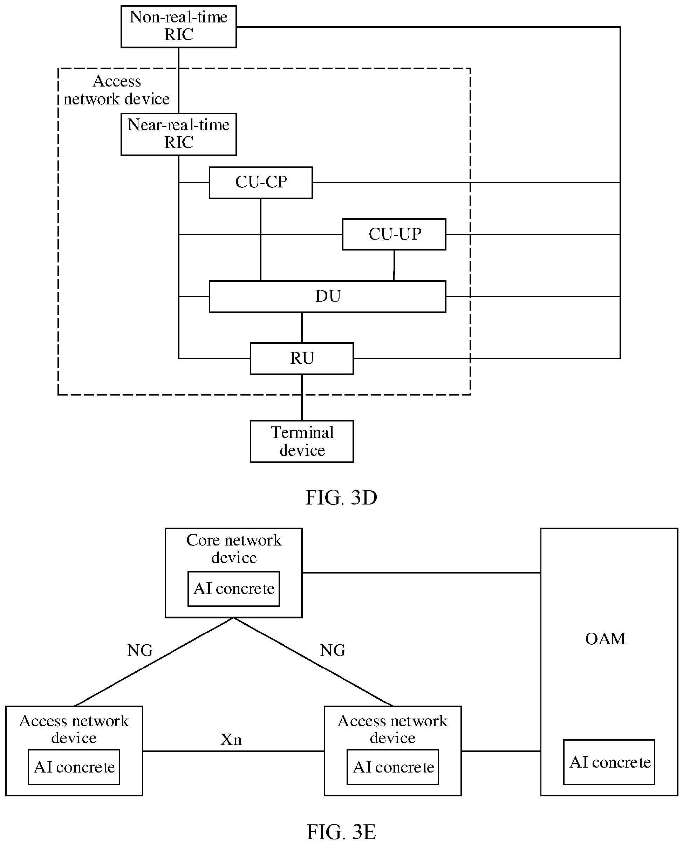

FIG. 3D is an example diagram of a network architecture to which a method according to this disclosure can be applied. In comparison with FIG. 3C, in FIG. 3C, a CU is separated into a CU-CP and a CU-UP.

FIG. 3E is an example diagram of a network architecture to which a method according to this disclosure can be applied. As shown in FIG. 3D, optionally, an access network device includes one or more AI concretes, and a function of the AI concrete is similar to that of the near-real-time RIC. Optionally, OAM includes one or more AI concretes, and a function of the AI concrete is similar to that of the non-real-time RIC. Optionally, a core network device includes one or more AI concretes, and a function of the AI concrete is similar to that of the non-real-time RIC. When the OAM and the core network device each include an AI concrete, models obtained through training by the AI concretes of the OAM and the core network device are different, and/or models used for inference are different.

In this disclosure, the models are different in terms of at least one of the following: a structure parameter (for example, at least one of a quantity of layers of the model, a width of the model, a connection relationship between layers, a weight of a neuron, an activation function of a neuron, or an offset in an activation function) of the model, an input parameter (for example, a type of the input parameter and/or a dimension of the input parameter) of the model, or an output parameter (for example, a type of the output parameter and/or a dimension of the output parameter) of the model.

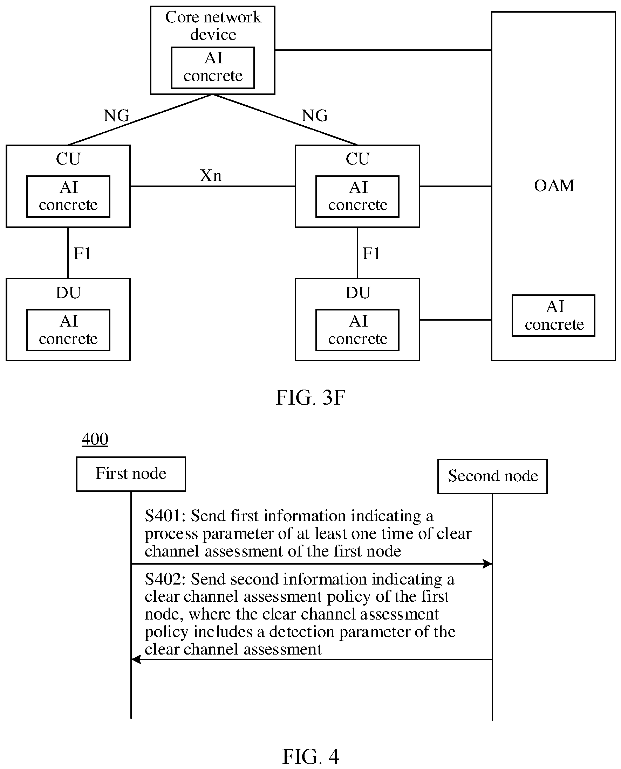

FIG. 3F is an example diagram of a network architecture to which a method according to this disclosure can be applied. In comparison with FIG. 3E, in FIG. 3F, an access network device is separated into a CU and a DU. Optionally, the CU may include an AI concrete, and a function of the AI concrete is similar to that of the near-real-time RIC. Optionally, the DU may include an AI concrete, and a function of the AI concrete is similar to that of the near-real-time RIC. When the CU and the DU each include an AI concrete, models obtained through training by the AI concretes of the CU and the DU are different, and/or models used for inference are different. Optionally, the CU in FIG. 3E may be further divided into a CU-CP and a CU-UP. Optionally, one or more AI models may be deployed in the CU-CP. Optionally, one or more AI models may be deployed in the CU-UP.

Optionally, as described above, in FIG. 3E or FIG. 3F, OAM of the access network device and OAM of the core network device may be separately deployed.

In this disclosure, one parameter or a plurality of parameters may be obtained through inference by using one model. Learning processes of different models may be deployed in different devices or nodes, or may be deployed in a same device or node. Inference processes of different models may be deployed in different devices or nodes, or may be deployed in a same device or node.

The network architecture and the service scenario described in this disclosure are intended to describe the technical solutions in this disclosure more clearly, and do not constitute a limitation on the technical solutions provided in this disclosure. A person of ordinary skill in the art may know that, with evolution of the network architecture and emergence of a new service scenario, the technical solutions provided in this disclosure are also applicable to similar technical problems.

A communication device needs to meet a regulatory requirement formulated by a radio regulatory department to perform communication by using an unlicensed spectrum. For example, communication devices in a wireless fidelity (wireless fidelity, Wi-Fi) system, a 4^{th} generation (4^{th} generation, 4G) mobile communication long term evolution (long term evolution, LTE) system, and a 5^{th} generation (5^{th} generation, 5G) mobile communication new radio (new radio, NR) system can all perform communication in an unlicensed spectrum of a 5 GHz frequency band. To ensure fair coexistence of the systems, the regulatory requirement specifies that a communication device that uses a spectrum resource of the frequency band needs to perform clear channel assessment (clear channel assessment, CCA) on the spectrum resource in a unit of a specified bandwidth, to determine whether a channel of the unlicensed spectrum is clear. When it is determined that the channel is in a clear state, the channel can be accessed, in other words, a signal can be sent by using an unlicensed spectrum resource. The clear channel assessment may also be referred to as listen before talk (listen before talk, LBT).

When the regulatory requirement is met, the communication device may autonomously select a related parameter for performing clear channel assessment. This disclosure proposes that an artificial intelligence technology may be applied to assisting the communication device in selecting the related parameter for the clear channel assessment, to increase a probability of accessing the channel and improve reliability of performing communication by the communication device by using the unlicensed spectrum on the premise that a use rule of the unlicensed spectrum is met.

The following describes the communication method provided in this disclosure with reference to the accompanying drawings.

FIG. 4 is a schematic flowchart of a communication method 400 according to this disclosure. A first node shown in FIG. 4 is a communication node that can perform communication by using an unlicensed spectrum, and a second node can determine, based on a related parameter obtained from the first node, a policy of performing clear channel assessment by the first node. It should be noted that the first node and the second node may be two communication devices, the first node and the second node may be apparatuses (such as chips) separately disposed in different communication devices, or the first node and the second node may be two modules/apparatuses disposed in a same communication device. This is not limited in this application. The communication method includes but is not limited to the following steps.

S401: The first node sends first information to the second node, where the first information indicates process parameter information of at least one time of clear channel assessment of the first node.

Correspondingly, the second node receives the first information from the first node, and determines the process parameter information of the at least one time of clear channel assessment of the first node based on the first information.

The first node sends the first information to the second node, and provides, for the second node by using the first information, parameter information required by the second node to infer a clear channel assessment policy, so that the second node can infer a clear channel assessment policy of the first node based on the first information.

In an implementation, the first node may periodically send the first information to the second node, where the at least one time of clear channel assessment is clear channel assessment performed by the first node in one periodicity.

In another implementation, the first node may send the first information to the second node when clear channel assessment is performed for a preset quantity of times, where the first information indicates process parameter information of the preset quantity of times of clear channel assessment.

For example, the preset quantity of times may be notified by the second node, or may be predefined in a protocol.

In another implementation, the second node may send indication information to the first node, to indicate the first node to send the first information. After receiving the indication information, the first node sends the first information to the second node.

Optionally, the indication information may indicate the first node to send process parameter information of the latest N times of clear channel assessment. After receiving the indication information, the first node indicates the process parameter information of the latest N times of clear channel assessment by using the first information. N is a positive integer. A value of N is agreed on in a protocol, or is notified by the second node. This is not limited.

In specific implementation, a quantity of times of clear channel assessment in the at least one time of clear channel assessment may be determined based on a specific implementation. The first information may indicate process parameter information of one time of clear channel assessment performed by the first node, or the first information may indicate process parameter information of each time of clear channel assessment in a plurality of times of clear channel assessment performed by the first node. This is not limited in this disclosure.

When a use rule of an unlicensed spectrum resource is met, the first node may select, based on a to-be-transmitted signal (where the to-be-transmitted signal may be control information, data, a reference signal, or the like), a clear channel assessment manner from a plurality of clear channel assessment manners to perform channel detection. A period (which is referred to as channel occupancy time (channel occupancy time, COT)) in which a channel is allowed to be occupied after the channel is accessed in different clear channel assessment manners may be different. Longer COT indicates that more resources can be used. Correspondingly, a larger amount of data can be transmitted. Optionally, the first node may determine the clear channel assessment manner (where the clear channel assessment manner may also be referred to as a clear channel assessment type) based on a service priority of the to-be-transmitted signal. For example, the first node may select, based on the service priority of the to-be-transmitted signal, a clear channel assessment manner that matches the service priority. For example, the first node may divide the service priority based on a data amount, and different data amounts may correspond to detection manners with different COT. For another example, the service priority may be divided based on a latency requirement. A service with a higher latency requirement may correspond to a clear channel assessment manner with shorter detection time, and corresponding channel occupancy time may be shorter. For another example, the service priority may be divided based on a reliability requirement. A service with a higher reliability requirement may correspond to a clear channel assessment manner with longer detection time. It is determined, through detection as much as possible, that a channel is clear, and interference is low, to meet the reliability requirement. A service with a lower reliability requirement may correspond to a clear channel assessment manner with shorter detection time. However, this disclosure is not limited thereto.

To better understand the communication method provided in this disclosure, the following first describes four clear channel assessment manners. It should be understood that a clear channel assessment manner used in a specific implementation is not limited in this disclosure.

### Manner 1

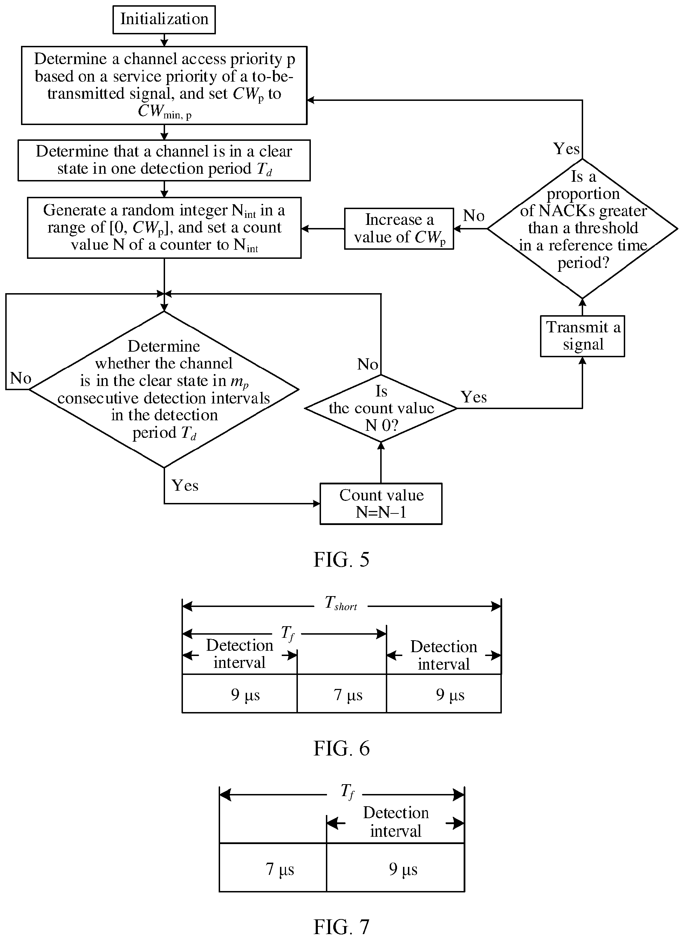

FIG. 5 is a schematic flowchart of a clear channel assessment manner 1. In the clear channel assessment manner 1, a channel access priority may be determined based on a service priority of a to-be-transmitted signal, to determine parameters of the clear channel assessment manner with a corresponding priority based on Table 1.

**Table 1**

| Channel access priority (p) | *mₚ* | *CW*_{min,p} | *CW*_{max,p} | *T*_{*m*cot,*p*} | Optional value of *CW*ₚ |
|---|---|---|---|---|---|
| 1 | 1 | 3 | 7 | 2 ms | {3, 7} |
| 2 | 1 | 7 | 15 | 3 ms | {7, 15} |
| 3 | 3 | 15 | 63 | 8 ms or 10 ms | {15,31,63} |
| 4 | 7 | 15 | 1023 | 8 ms or 10 ms | {15, 31, 63, 127, 255, 511, 1023} |

Clear channel assessment in the manner 1 includes but is not limited to the following steps.
1. The first node determines the channel access priority p based on the service priority of the to-be-transmitted signal, and sets *CW*ₚ to *CW*_{min,p}.
   After determining the channel access priority p based on the service priority of the to-be-transmitted signal, the first node may determine, based on a parameter correspondence relationship shown in Table 1, a maximum value *CW*_{max,p} and a minimum value *CW*_{min,p} of a contention window (contention window, CW) corresponding to the channel access priority p, and an optional value of the contention window. A value of *CW*ₚ initially selected by a terminal device is a smallest value in optional values of *CW*ₚ, namely, *CW*_{min,p.} The selected value of *CW*ₚ is used as an upper limit value of an optional range of an initial count value of a counter in step 2. For example, when the channel access priority p is 2, the initial value of *CW*ₚ is 7.
2. When the first node determines that a channel is in a clear state in one detection period *T_{d}*, the first node performs step 3.
   The detection period *T_{d}* =16 µs+ *mₚ* ×9 µs, the detection period *T_{d}* may also be referred to as defer duration (defer duration), and *mₚ* may be determined based on Table 1 and the channel access priority. The first node performs energy detection on a frequency domain resource of a specified bandwidth. When energy detected at *mₚ* consecutive detection intervals in one period *T_{d}* is less than an energy threshold, it is considered that the channel is in the clear state in the detection period *T_{d}* .
3. The first node generates a random integer Nᵢₙₜ in a range of [0, *CW*ₚ], and sets a count value N of the counter to Nᵢₙₜ.
   The first node randomly selects a value Nᵢₙₜ from 0 to *CW*ₚ as an initial value of the count value N of the counter, that is, N=Nᵢₙₜ. Nᵢₙₜ is a random value that meets uniform distribution and that ranges from 0 to *CW*ₚ, where 0 ≤ Nᵢₙₜ ≤ *CW*ₚ. Nᵢₙₜ and the detection period *T_{d}* determine a length of the contention window actually used in the clear channel assessment, in other words, the contention window includes at least Nᵢₙₜ detection periods *T_{d}* based on steps described below.
4. The first node determines whether the channel is in the clear state in the *mₚ* detection intervals in each detection period *T_{d}*.
   When the channel is in the clear state in one detection period *T_{d}*, the count value N of the counter is decreased by 1; otherwise, N remains unchanged. Then, energy in a next period *T_{d}* continues to be detected. Each time the channel is detected to be in the clear state in one period *T_{d}*, the count value N of the counter is decreased by 1.
   An energy detection threshold may be preconfigured, or may be obtained by the first node through calculation based on a maximum transmit power and a channel bandwidth. The first node preferentially uses the preconfigured energy threshold. When there is no preconfigured energy threshold, the energy threshold obtained through calculation is used.
5. When the count value N of the counter is decreased to 0, the first node transmits a signal.
   After determining the channel access priority, the first node performs clear channel assessment based on the parameter corresponding to the channel access priority in Table 1, to determine that the channel is in the clear state, so as to transmit the signal. As shown in Table 1, a channel access priority corresponds to maximum channel occupancy time (maximum COT, MCOT), which is denoted as *T*_{*m*cot,*p*}. The MCOT is maximum time for which the channel is allowed to be occupied after the channel is accessed in the clear channel assessment manner corresponding to the channel access priority. Channel occupancy time of the first node cannot be greater than *T*_{*m*cot,*p*}.
6. The first node determines whether a proportion of negative acknowledgments (negative acknowledgments, NACKs) in hybrid automatic repeat request (hybrid automatic repeat request, HARQ) feedback in a reference time period is greater than a first threshold. If the proportion of the NACKs in the reference time period is greater than or equal to the first threshold, a value of *CW*ₚ is increased. If the proportion of the NACKs in the reference time period is less than the first threshold, *CW*ₚ is set to *CW*_{min,p}.

The reference time period is a time period from a start moment of specified channel occupancy time to an end moment of the 1^{st} time unit in which transmission of at least one data channel is completed, and the specified channel occupancy time is channel occupancy time in which the first node initiates channel occupancy and transmits the data channel last time. For example, the data channel may be a physical uplink shared channel (physical uplink shared channel, PUSCH) or a physical downlink shared channel (physical downlink shared channel, PDSCH). The time unit may be a slot, a subframe, or a frame. The first threshold is a threshold for determining signal transmission quality. However, this disclosure is not limited thereto.

After sending the data channel, the first node receives NACK feedback from a data channel receiving node. The first node may adjust the upper limit value *CW*ₚ of the contention window based on the proportion of NACKs in the reference time period. When HARQ feedback in which a proportion of NACKs is less than 10% (in other words, the first threshold is 10%) in the HARQ feedback in the reference time period is a NACK, the first node sets *CW*ₚ to a smallest value in the optional values; otherwise, the first node increases the value of *CW*ₚ to a next optional value of *CW*ₚ. For example, when a clear channel assessment manner with the channel access priority p=3 is used, a current value of *CW*ₚ is 15, and if the proportion of NACKs in the HARQ feedback in the reference time period is greater than or equal to 10%, the value of *CW*ₚ is increased to a next optional value of *CW*ₚ, and *CW*ₚ is set to 31. When *CW*ₚ is set to a maximum optional value (to be specific, a largest value in optional values) of *CW*ₚ corresponding to a current channel access priority, if the value of *CW*ₚ needs to be increased because the proportion of NACKs in the HARQ feedback in the reference time period is greater than or equal to 10%, *CW*ₚ remains the maximum optional value and is unchanged. When a quantity of detection times for which *CW*ₚ remains the maximum optional value reaches a preset quantity of times (where the preset quantity of times may be preconfigured), *CW*ₚ is adjusted to a minimum optional value (to be specific, a smallest value in optional values).

The first node may be a terminal device, and a clear channel assessment manner in the manner 1 is applicable to transmission of a PUSCH, a physical uplink control channel (physical uplink control channel, PUCCH), or a sounding reference signal (sounding reference signal, SRS) and initiation of a random access process by the terminal device. Alternatively, the first node may be an access network node, and the clear channel assessment manner in the manner 1 is applicable to transmission of any signal such as a PDSCH, a physical uplink control channel (physical downlink control channel, PDCCH), and a reference signal by the access network node.

### Manner 2

In a clear channel assessment manner in the manner 2, a detection period is *Tₛₕₒᵣₜ* =25 µs, and *Tₛₕₒᵣₜ* includes one time interval *T_{ƒ}* =16 µs and one detection interval of 9 µs after the time interval *T_{ƒ}.* In the manner 2, 9 µs starting from a start moment in 16 µs of *T_{ƒ}* is one detection interval, and the detection period *Tₛₕₒᵣₜ* is shown in FIG. 6. When energy detected by a communication device in two detection intervals of 9 µs in the detection period *Tₛₕₒᵣₜ* is less than an energy threshold, it is considered that a channel is in a clear state. If it is determined through detection that the channel is in the clear state, the first node needs to immediately send a signal after the detection ends.

The first node may access the channel in the clear channel assessment manner in the manner 2 after the signal is received or after the signal transmission ends.

### Manner 3

In a clear channel assessment manner in the manner 3, a detection period is *T_{ƒ}* =16 µs. In the manner 3, 9 µs before an end moment in the detection period *T_{ƒ}* is a detection interval, and the detection period *T_{ƒ}* is shown in FIG. 7. If a channel is in a clear state for at least 5 µs in the detection period *T_{ƒ}*, it is considered that the channel is in the clear state and the channel can be accessed, and the time of 5 µs includes at least 4 µs in the detection interval. In other words, if the channel is in the clear state for at least 4 µs in the detection interval, and the channel is in the clear state for at least 5 µs in the detection period *T_{ƒ}*, it is considered that the channel is in the clear state and the channel can be accessed. If it is determined through detection that the channel is in the clear state, the first node needs to immediately send a signal after the detection ends.

### Manner 4

In the manner 4, the first node can transmit a signal without performing energy detection, but a transmission period cannot exceed 584 µs.

The foregoing describes, by using examples, a plurality of clear channel assessment manners in the unlicensed spectrum. It should be understood that the clear channel assessment manner used by the first node in this disclosure may be one of the foregoing clear channel assessment manners, or may be another clear channel assessment manner. It should be noted that, if the first information indicates a plurality of times of clear channel assessment, detection manners used by the first node for the plurality of times of clear channel assessment may be the same or may be different. A specific manner may be a clear channel assessment manner selected by the first node based on a service priority of a to-be-transmitted signal. This is not limited in this disclosure.

The first node may notify, by using the first information, the second node of the process parameter information of the at least one time of clear channel assessment performed by the first node, so that the second node can obtain, through inference based on the first information, a clear channel assessment policy suitable for the first node, and notify the first node of the clear channel assessment policy. In this way, a probability of accessing a channel by the first node is increased and communication reliability is improved when a use rule of the unlicensed spectrum is met.

Optionally, a type of parameter information required by the second node to infer a clear channel assessment policy may be predefined in a protocol, or the second node may send third information to the first node, where the third information indicates the type of the parameter information required by the second node to infer the clear channel assessment policy. The second node determines, based on the third information, the type of the parameter information required by the second node to infer the clear channel assessment policy, and provides, by using the first information, a corresponding type of parameter information for the second node, so that the second node infers, based on the first information, a clear channel assessment policy suitable for the first node, and notifies the first node of the clear channel assessment policy. In this way, a probability of accessing a channel by the first node is increased and communication reliability is improved when a use rule of the unlicensed spectrum is met.

Optionally, the process parameter information includes but is not limited to one or more of the following information:
service priority information of a signal for triggering the clear channel assessment, a manner of the clear channel assessment, channel access priority information, contention window information, detection period information, an energy detection threshold, or detection result information.

The contention window information may include one or more parameters of an upper limit value *CW*ₚ of a selected contention window, an initial count value Nᵢₙₜ of a selected counter, or a quantity of detection periods in one time of clear channel assessment. The detection period information may include but is not limited to a length of the detection period and/or a quantity of detection intervals in the detection period. The detection result information includes one or more of the following:
a channel state determined after the clear channel assessment, a quantity or a proportion of detection periods in which a channel is detected to be in a clear state, a quantity or a proportion of detection periods in which a channel is detected to be in a busy state, or an energy value detected in the detection interval.

For example, the at least one time of clear channel assessment includes the clear channel assessment manner in the manner 1. For example, when there is a to-be-transmitted signal, the first node performs clear channel assessment in the clear channel assessment manner in the manner 1. The process parameter information that is of the clear channel assessment and that is indicated by the first information may include service priority information of a signal for triggering the clear channel assessment, a manner of the clear channel assessment, namely, the manner 1, and detection result information. Optionally, the process parameter information may further include the channel access priority p, the upper limit value *CW*ₚ of the contention window, and the initial count value Nᵢₙₜ of the counter that are specifically selected in the manner 1. For example, the first information specifically indicates that the channel access priority p is 3, the upper limit value *CW*ₚ of the contention window is 31, and the count value Nᵢₙₜ of the counter is 23.

Optionally, in the example, the process parameter information may further include a quantity of detection periods detected in this time of clear channel assessment. Based on the foregoing descriptions of the clear channel assessment in the manner 1, the initial count value Nᵢₙₜ of the counter is for limiting a quantity of detection periods *T_{d}* in which a channel is detected to be in a clear state. When the first node detects, in one detection period, that a channel is in a busy state, the count value of the counter remains unchanged. Therefore, to enable the second node to more accurately obtain related information of this time of clear channel assessment, the first node may further notify the second node of a specific quantity of detection periods detected in this time of detection.

Optionally, in this example, the process parameter may further include an energy threshold used in this time of clear channel assessment, so that the second node can learn of a standard for determining a channel state by the first node in this time of detection. The first information may further indicate detection result information. For example, the detection result information may include a detection result corresponding to each detection period *T_{d}*, to be specific, a channel is clear or busy.

For another example, the at least one time of clear channel assessment includes the clear channel assessment manner in the manner 3, and the process parameter information that is of the clear channel assessment and that is indicated by the first information may indicate the detection manner, namely, the manner 3, the energy threshold, and the detection result information. For example, the detection result information may indicate that a channel state is determined as a clear state or a busy state through this time of clear channel assessment. The detection result information may further indicate a period or a proportion of a channel in a clear state or a period or a proportion of a channel in a busy state that is specifically detected in a detection period *T_{ƒ}* . For example, in this time of clear channel assessment, the first node detects that the channel is in the clear state for 8 µs in the detection period *T_{ƒ}*, and the first information may indicate that a period in which the channel is in the clear state is 8 µs, or indicate that the channel is in the clear state for 50% of the detection period *T_{ƒ}.* However, this disclosure is not limited thereto.

For another example, process parameter information that is of one time of clear channel assessment and that is indicated by the first information may include a length of a detection period in this time of clear channel assessment, a quantity of detection intervals included in the detection period, an energy threshold, and detection result information. In other words, the process parameter of the clear channel assessment may not indicate a manner of the clear channel assessment, but indicate detection period information (for example, a time length of the detection period and a quantity of included detection intervals), the energy threshold, and the detection result information of the clear channel assessment.

It should be noted that the foregoing merely describes, by using an example, a type of the process parameter information of the clear channel assessment indicated by the first information. The type of the process parameter information of the clear channel assessment indicated by the first information may be predefined in a protocol, or may be indicated by the second node. This is not limited in this disclosure. The parameter information required by the second node to infer the clear channel assessment policy may further include transmission quality information described below.

Optionally, the first information further includes the transmission quality information, and the transmission quality information indicates quality of signal transmitted by the first node on an unlicensed spectrum resource.

In this disclosure, a signal transmitted by the first node on a channel accessed through clear channel assessment may be one or more of data, a reference signal, or control information. The data may be a transport block (transport block, TB), a code block (code block, CB), or a code block group (CB group, CBG) carried on a PDSCH resource or a PUSCH resource. The reference signal may include but is not limited to a demodulation reference signal (demodulation reference signal, DMRS), a channel state information-reference signal (channel state information-reference signal, CSI-RS), or a sounding reference signal (sounding reference signal, SRS). The control information may include but is not limited to a system message (system information, SI), uplink control information (uplink control information, UCI), or downlink control information (downlink control information). The first node may be an access network node or a terminal device. Specifically, when the first node is the access network node, a transmitted signal may be a downlink signal. When the first node is the terminal device, a transmitted signal may be an uplink signal, a signal transmitted by the terminal device, or a sidelink (sidelink) signal between terminal devices. This is not limited in this disclosure.

For example, the first node may periodically send the first information, where the first information may include signal quality information of a signal transmitted by the first node by using the unlicensed spectrum resource in one periodicity.

For another example, for clear channel assessment with a detection result being that a channel is in a clear state, the first node transmits a signal after the clear channel assessment, where the first information may further include transmission quality information of signal transmission corresponding to detection that is indicated by the first information and that is in the at least one time of clear channel assessment with a detection result being that a channel is clear.

By way of example but not limitation, the transmission quality information may indicate one or more of the following information:
channel occupancy time COT of signal transmission, signal quality information, a proportion of signal transmission successes in a reference time period, a proportion of signal transmission failures in a reference time period, a first threshold, or a reference time period for assessing signal transmission quality.

The transmission quality information may include the channel occupancy time of the signal transmission. For example, the first node periodically sends the first information to the second node. The first node may notify, by using the first information, the second node of channel occupancy time in which the first node occupies a channel to transmit a signal after accessing the channel through clear channel assessment each time in one periodicity. For example, the transmission quality information may include a quantity K of times that the first node transmits a signal by using the unlicensed spectrum resource in one periodicity, and the transmission quality information indicates K segments of COT are COT in which the signal is transmitted for K times. For another example, the first information includes transmission quality information of signal transmission corresponding to detection, in the at least one time of clear channel assessment, with a detection result being that a channel is clear. Each piece of transmission quality information includes corresponding COT in which a signal is transmitted after clear channel assessment. However, this disclosure is not limited thereto.

The transmission quality information may include the signal quality information, and the signal quality information indicates quality of a signal transmitted on the unlicensed spectrum resource, so that the second node can infer the clear channel assessment policy based on the quality of the signal transmitted after the first node accesses a channel.

In an example, when detecting that the channel is in a clear state, the first node sends a data channel by using the unlicensed spectrum resource. The data channel includes a DMRS for demodulation. A node that receives the data channel may measure signal quality of the DMRS, and feed back the signal quality to the first node. The signal quality of the DMRS may represent transmission quality of the data channel. The first node may notify the second node of the transmission quality by using signal quality information. For example, it may be specified that the node that receives the data channel measures signal quality of a DMRS on the 1^{st} data channel in one segment of COT, and feeds back the signal quality to the first node, to reduce feedback overheads. However, this disclosure is not limited thereto.

In another example, the first node may be an access network node. When a channel is detected to be in a clear state, the access network node sends a CSI-RS to a terminal device by using the unlicensed spectrum resource. The terminal device measures signal quality of the CSI-RS, and feeds back the signal quality to the access network node. First information sent by the access network node to the second node includes signal quality information, and the second node is notified, by using the signal quality information, of signal quality of a CSI-RS transmitted by the access network node by using an unlicensed spectrum.

In another example, the first node may be a terminal device. The terminal device sends an SRS to an access network node by using the unlicensed spectrum resource. The access network node measures signal quality of the SRS, and feeds back the signal quality to the terminal device. First information sent by the terminal device to the second node includes signal quality information indicating the signal quality. In this example, the second node may be an access network node, or may be another node in a network, and the first information may be transparently transmitted to the second node via the access network node.

By way of example but not limitation, the signal quality may be one or more of reference signal received power (reference signal received power, RSRP), reference signal received quality (reference signal received quality, RSRQ), or a signal to interference plus noise ratio (signal to interference plus noise ratio, SINR).

The transmission quality information may include a proportion of signal transmission successes or a proportion of signal transmission failures. In the foregoing clear channel assessment manner 1, it is described that the first node may compare the proportion of NACK feedback in the reference time period with the first threshold to adjust the upper limit value of the contention window. For example, when a channel is detected to be in a clear state, the first node may send a data channel by using the unlicensed spectrum resource. For example, the data channel includes a plurality of CBGs. A node that receives the data channel may send HARQ feedback to the first node, and the first node may determine, based on the HARQ feedback, whether each CBG on the data channel is successfully received. When one CBG on the data channel is successfully received, the node feeds back one ACK corresponding to the CBG. When one CBG on the data channel is not successfully received, the node feeds back a negative acknowledgment (negative acknowledgment, NACK) corresponding to the CBG, or does not feed back an ACK, indicating that the CBG is not successfully received. The transmission quality information may include a proportion of signal transmission successes, in other words, a proportion, calculated by the first node, of ACK feedback in a reference time period. Alternatively, the transmission quality information may include a proportion of signal transmission failures, for example, a proportion of NACKs fed back in a reference time period or a proportion of no ACK fed back in a reference time period.

The reference time period may be predefined in a protocol, notified by the second node, or determined by the first node. For example, the reference time period may be the time period defined in the foregoing detection manner 1, or may be a time period defined in a specific implementation. For example, the reference time period may be a period of a resource occupied by a last data channel in one segment of COT. If the reference time period is determined by the first node, the first node may notify the second node of information about the reference time period by using the transmission quality information.

The transmission quality information may include the first threshold for determining signal transmission quality, so that the second node may learn of, based on the first threshold, a standard for determining the transmission quality by the first node. The second node may infer the clear channel assessment policy of the first node based on the first threshold.

In an optional implementation, the first node may not send the transmission quality information to the second node, the first node may send a reference signal by using an unlicensed frequency band resource after accessing a channel, and the second node determines, based on the reference signal received from the first node, quality of a signal transmitted by a terminal device on the unlicensed spectrum resource. For example, the first node may be a terminal device, and the second node may be an access network node. The access network node may determine, based on a reference signal sent by the terminal device on the unlicensed spectrum resource, quality of the signal transmitted by the terminal device. However, this disclosure is not limited thereto. In a specific implementation, the second node may infer the clear channel assessment policy with reference to the quality of the signal transmitted by the first node. Alternatively, the second node may infer the clear channel assessment policy only based on the process parameter information of the clear channel assessment without referring to the quality of the signal transmitted by the first node.

S402: The second node sends second information to the first node, where the second information indicates the clear channel assessment policy of the first node, and the clear channel assessment policy includes detection parameter information of the clear channel assessment.

Correspondingly, the first node receives the second information from the second node, and determines the clear channel assessment policy based on the second information.

As described above, the type of the parameter information required by the second node to infer the clear channel assessment policy may be predefined in the protocol, or the second node may send the third information to the first node, where the third information indicates the type of the parameter information required by the second node to infer the clear channel assessment policy. In this case, the first node and the second node can reach a consensus on the type of the parameter information required by the second node to infer the clear channel assessment policy, so that the first information sent by the first node to the second node includes the corresponding type of parameter information required by the second node. For example, the parameter information required by the second node to infer the clear channel assessment policy may include the process parameter information of the clear channel assessment, or may include the process parameter information of the clear channel assessment and the transmission quality information.

After receiving the first information, the second node obtains the clear channel assessment policy of the first node through inference based on the first information. For example, the second node is configured with an intelligent model for inferring the clear channel assessment policy, and the second node infers the clear channel assessment policy by using the intelligent model. For example, the received first information is input into the intelligent model, and an obtained output of the intelligent model is the clear channel assessment policy obtained by the intelligent model through inference based on the first information.

In an implementation, the intelligent model may be preconfigured in the second node.

In another implementation, the intelligent model may be an intelligent model that is for inference and that is obtained by performing model training by the second node based on training data.

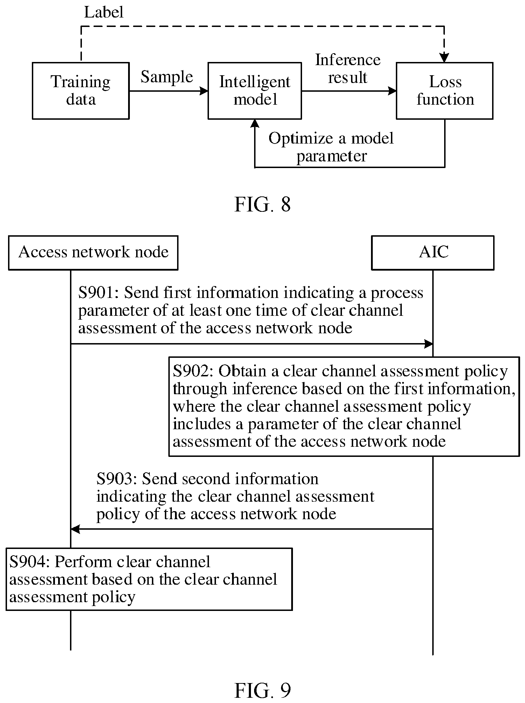

For example, FIG. 8 is an example diagram of a training process of an intelligent model. The second node may obtain one piece of training data. For example, the training data may be obtained by the second node from the first node. For example, the first node sends the first information to the second node, and in the training process of the intelligent model, the second node uses the received first information as the training data to train the intelligent model. However, this disclosure is not limited thereto. The training data may be downloaded by the second node from a network. For example, the second node is an access network node, and the access network node may download training data from a node such as OAM. As shown in FIG. 8, the training data may include a training sample, and the training sample is used as an input and is processed by the intelligent model, and then an inference result, namely, a clear channel assessment policy, is output. The second node obtains an output of a loss function through calculation based on the inference result by using the loss function, and then optimizes a model parameter of the intelligent model based on the loss function, to obtain an intelligent model obtained by optimizing and updating the parameter. In a next round of training, the second node obtains another piece of training data, and processes the training data by using the intelligent model obtained by updating the parameter to output an inference result. A plurality of rounds of training are performed on the intelligent model by using a large amount of training data. When an output of the loss function meets a preset condition, training of the intelligent model is completed, to obtain a trained intelligent model, that is, an intelligent model that can be for inferring a clear channel assessment policy.

In an example of this implementation, the second node may train the intelligent model in a supervised learning manner. For example, the training data may further include a label, and the label is a correct inference result corresponding to the first information, that is, a correct clear channel assessment policy corresponding to the first information. In the supervised learning training manner, the loss function is for calculating an error between the inference result and the label, and the second node may optimize an algorithm by using the model parameter, to optimize a parameter of the intelligent model based on the error obtained by using the loss function. A plurality of rounds of training are performed on the intelligent model by using a large amount of training data, so that the training of the intelligent model is completed after a difference between the output of the intelligent model and the label is less than or equal to a first preset value.

In another example of this implementation, the second node may train the intelligent model in an unsupervised learning manner, and the training data does not include a label. For unsupervised learning, the loss function may be a function for assessing performance of the model. The second node learns an internal pattern of the sample by using an algorithm, to complete the training of the intelligent model based on the sample. A plurality of rounds of training are performed on the intelligent model by using a large amount of training data, so that the training of the intelligent model is completed after the output of the intelligent model is greater than or equal to a second preset value.

It should be understood that a training manner of the model used in a specific implementation is not limited in this disclosure.

In another implementation, the intelligent model of the second node may be obtained by a third node.

The third node may obtain a trained intelligent model through model training, and send the trained intelligent model to the second node. After obtaining the trained intelligent model, the second node infers a clear channel assessment policy by using the intelligent model. A process of training the intelligent model by the third node may be shown in FIG. 8. The third node may obtain training data from the first node. For example, the first node sends, to the third node, the first information as the training data for model training. The third node trains the intelligent model based on the training data. It should be noted that the training data may be directly sent by the first node to the third node, or may be forwarded to the third node via another node. For example, the training data may be forwarded to the third node via the second node or a node in another network. The third node may train the intelligent model in a supervised learning manner, or the third node may train the intelligent model in an unsupervised learning manner. For a specific implementation, refer to the foregoing manner of training the intelligent model by the second node. For brevity, details are not described herein again.

For example, the second node may be an access network node, and the access network node may obtain the intelligent model from the third node. For example, the third node may be a core network node or OAM. However, this application is not limited thereto. For example, the second node may alternatively be an AI concrete in a core network device, and the third node may be OAM. After receiving the first information from the first node in S401, the second node obtains the clear channel assessment policy of the first node through inference by using the intelligent model. Optionally, the clear channel assessment policy includes one or more of the following detection parameter information:
service priority information of a signal for triggering the clear channel assessment, a manner of the clear channel assessment, channel access priority information, contention window information, detection period information, or an energy detection threshold. For the foregoing information, refer to the foregoing descriptions. For brevity, details are not described herein again.

Optionally, the clear channel assessment policy includes detection parameter information of clear channel assessment corresponding to each of a service priority of at least one signal, so that the first node can perform, based on a service priority of a to-be-transmitted signal, clear channel assessment by using detection parameter information of clear channel assessment corresponding to the service priority in the clear channel assessment policy.

Optionally, the clear channel assessment policy further includes one or more of information about a reference time period for assessing signal transmission quality, a first threshold, maximum channel occupancy time corresponding to the clear channel assessment, or transmission quality prediction information. For example, the clear channel assessment policy further includes information about a reference time period corresponding to signal transmission quality obtained through inference by the intelligent model, and the information about the reference time period indicates a reference time period for assessing the signal transmission quality. The clear channel assessment policy may further include the first threshold for assessing the signal transmission quality, so that the first node can adjust a length of a contention window based on the signal transmission quality in the reference time period. Alternatively, the clear channel assessment policy may not include the information about the reference time period and includes only the first threshold. The reference time period may be predefined or determined by the first node. The first node may determine the signal transmission quality in the reference time period based on the first threshold.

For another example, the clear channel assessment policy may include the maximum channel occupancy time. After the first node receives the clear channel assessment policy and performs clear channel assessment to access a channel, a maximum period in which the channel can be occupied does not exceed the maximum channel occupancy time indicated by the clear channel assessment policy, so that reliability of signal transmission can be improved.

For another example, the clear channel assessment policy may further include the transmission quality prediction information. The transmission quality prediction information is quality of a signal that is transmitted after the first node performs clear channel assessment by using the clear channel assessment policy to access a channel and that is obtained by the second node through inference. For example, the clear channel assessment policy may include a plurality of clear channel assessment manners, and the transmission quality prediction information further indicates quality of a signal that is transmitted after the channel is accessed in each detection manner and that is predicted by the second node. The first node may select, based on the transmission quality prediction information and a reliability requirement of the to-be-transmitted signal, a clear channel assessment manner that meets the reliability requirement of signal transmission.

The communication method shown in FIG. 4 may be applied to a plurality of application scenarios. The following describes several application scenarios by using examples. It should be understood that this disclosure is not limited thereto.

Example 1: The first node may be a terminal device or an apparatus disposed in the terminal device, and the second node may be an access network node, for example, an access network device or an apparatus disposed in the access network device. The terminal device provides, for the access network node by using the first information, parameter information for inferring a clear channel assessment policy. The access network node obtains, through inference based on the first information, a clear channel assessment policy suitable for the terminal device, and then sends the clear channel assessment policy to the terminal device. For example, the access network node may be an AI concrete in the access network device, for example, an RIC module in the access network device. However, this disclosure is not limited thereto.

Example 2: The first node may be an access network node, and the second node may be an AI concrete (namely, an AIC).

For example, as shown in FIG. 9, the access network node performs S901 to send first information to the AIC, and provides, for the AIC by using the first information, parameter information for inferring a clear channel assessment policy. The AIC performs S902 to obtain, based on the first information, a clear channel assessment policy suitable for the access network node, and then performs S903 to send the clear channel assessment policy to the access network node. When the access network node needs to send a signal to a terminal device by using an unlicensed spectrum resource, the access network node may detect a clear state of a downlink channel based on the clear channel assessment policy, and send the signal when the downlink channel is clear. The access network node may be an access network device, or a module or unit of the access network device. In a manner, the AI concrete may be a network node other than the access network device in a network, for example, OAM. In another manner, the AI concrete and the access network node may be two nodes disposed in a same access network device. For example, the access network node may be a CU, a DU, or an RU of the access network device, and the AI concrete may be a near-real-time RIC in the access network device. It should be understood that the foregoing merely describes, by using an example, a specific implementation scenario of the access network node and the AI concrete. However, this disclosure is not limited thereto.

The access network node may directly send the first information to a third-party node, or may transfer the first information to the third-party node through forwarding by another network node. This is not limited in this disclosure.

Example 3: The first node may be a terminal device or an apparatus disposed in the terminal device, or may be a third-party node other than the terminal device and an access network node. For example, the third-party node may be a network element that has an AI function or in which an AI concrete is disposed in a network. The terminal device may transfer the first information to the third-party node through forwarding by using the access network node.

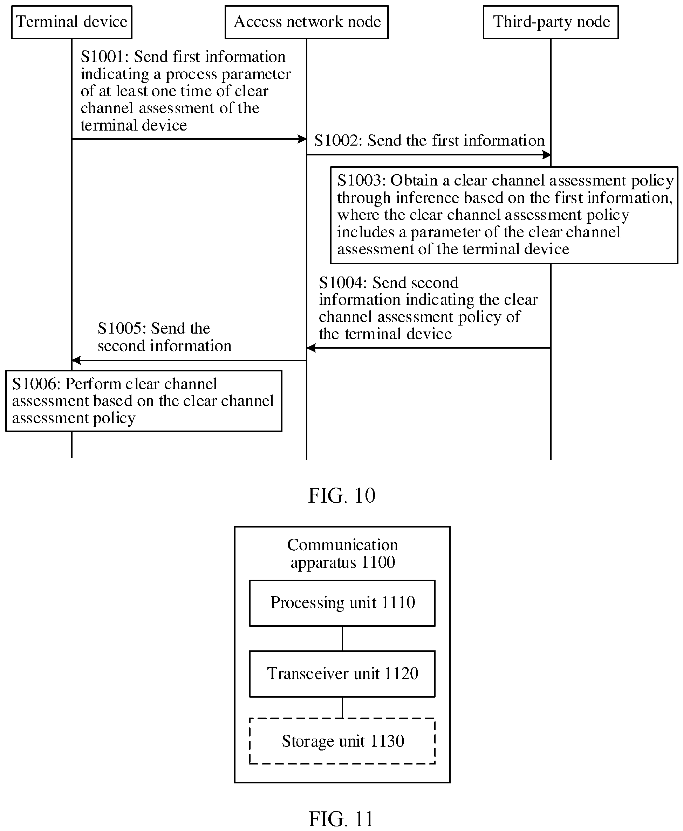

For example, as shown in FIG. 10, the first node is a terminal device. The terminal device performs S1001 to send first information to the access network node. After receiving the first information, the access network node performs S1002 to send the first information to the third-party node. The third-party node performs S1003 to obtain, through inference based on the first information, a clear channel assessment policy suitable for the terminal device, and then notifies the terminal device of the clear channel assessment policy by using second information. Specifically, the third-party node performs S1004 to send the second information to the access network node. After receiving the second information, the access network node performs S1005 to forward the second information to the terminal device, so that the terminal device determines the clear channel assessment policy based on the second information after receiving the second information, and performs S1006 to perform clear channel assessment based on the clear channel assessment policy when a signal needs to be transmitted by using an unlicensed spectrum resource. For example, when the signal is a signal sent to the access network node, the terminal device detects a clear state of an uplink channel based on the clear channel assessment policy, and sends the signal to the access network node by using the unlicensed spectrum resource when the uplink channel is clear. For another example, when the signal is a signal sent to another terminal device, the terminal device detects a clear state of a sidelink (sidelink) channel based on the clear channel assessment policy, and sends the signal to a target terminal device by using the unlicensed spectrum resource when the sidelink channel is clear. It should be noted that, in this example, communication information may be directly exchanged between the access network node and the third-party node, and at least one communication node may be further included between the access network node and the third-party node. The communication information sent by the access network node to the third-party node may be forwarded by the at least one communication node to the third-party node, and the communication information sent by the third-party node to the access network node may be forwarded by the at least one communication node to the access network node.

Based on the foregoing solution, the second node can obtain the process parameter information of the clear channel assessment of the first node by using the first information, and provide, for the first node, the clear channel assessment policy obtained based on the first information. In this case, the first node can obtain a clear channel assessment policy suitable for the first node, to increase a probability of accessing a channel by the first node when a use rule of an unlicensed spectrum is met and reliability of unlicensed spectrum based communication is met, so that power consumption caused by frequent channel detection failures of the first node can be reduced.

In this disclosure, a network element may perform a part or all of steps or operations related to the network element. These steps or operations are merely examples. In this disclosure, other operations or variants of various operations may be further performed. In addition, the steps may be performed in a sequence different from a sequence presented in this disclosure, and not all the operations in this disclosure may be performed.

In various examples of this disclosure, unless otherwise stated or there is a logic conflict, terms and/or descriptions in different examples are consistent and may be mutually referenced, and technical features in different examples may be combined based on an internal logical relationship thereof, to form a new example.

The methods provided in this disclosure are described above in detail with reference to FIG. 4 to FIG. 10. The following accompanying drawings describe a communication apparatus and a communication device provided in this disclosure. To implement functions in the methods provided in this disclosure, each network element may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

FIG. 11 is a schematic block diagram of a communication apparatus according to this disclosure. As shown in FIG. 11, the communication apparatus 1100 may include a transceiver unit 1120.

In a possible design, the communication apparatus 1100 may correspond to the first node in the foregoing method, a chip disposed (or used) in the first node, or another apparatus, module, circuit, unit, or the like that can implement the method of the first node.

It should be understood that the communication apparatus 1100 may include units configured to perform the methods performed by the first node in the methods shown in FIG. 4, FIG. 9, and FIG. 10. In addition, the units in the communication apparatus 1100 and the foregoing other operations and/or functions are separately intended to implement corresponding procedures of the methods shown in FIG. 4. FIG. 9, and FIG. 10.

Optionally, the communication apparatus 1100 may further include a processing unit 1110. The processing unit 1110 may be configured to process instructions or data, to implement a corresponding operation.

It should be further understood that when the communication apparatus 1100 is the chip disposed (or used) in the first node, the transceiver unit 1120 in the communication apparatus 1100 may be an input/output interface or circuit in the chip, and the processing unit 1110 in the communication apparatus 1100 may be a processor in the chip.

Optionally, the communication apparatus 1100 may further include a storage unit 1130. The storage unit 1130 may be configured to store instructions or data. The processing unit 1110 may execute the instructions or the data stored in the storage unit, to enable the communication apparatus to implement a corresponding operation.

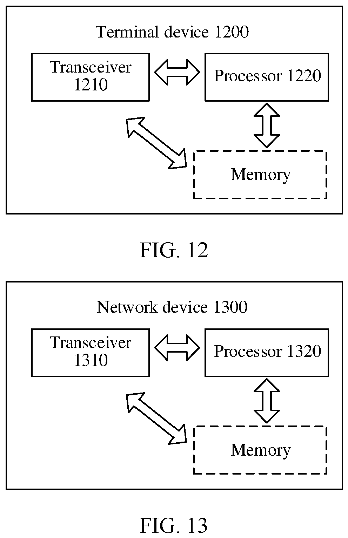

It should be understood that the transceiver unit 1120 in the communication apparatus 1100 may be implemented through a communication interface (for example, a transceiver or an input/output interface), for example, may correspond to a transceiver 1210 in a first node 1200 shown in FIG. 12. The processing unit 1110 in the communication apparatus 1100 may be implemented through at least one processor, for example, may correspond to a processor 1220 in the first node 1200 shown in FIG. 12. Alternatively, the processing unit 1110 in the communication apparatus 1100 may be implemented through at least one logic circuit. The storage unit 1130 in the communication apparatus 1100 may correspond to a memory in the first node 1200 shown in FIG. 12.

It should be further understood that a specific process in which the units perform the foregoing corresponding steps is described in detail in the foregoing method. For brevity, details are not described herein again.

In another possible design, the communication apparatus 1100 may correspond to the second node in the foregoing method, for example, a chip disposed (or used) in the second node, or another apparatus, module, circuit, or unit that can implement the method of the second node.

It should be understood that the communication apparatus 1100 may include units configured to perform the methods performed by the second node in the methods shown in FIG. 4, FIG. 9, and FIG. 10. In addition, the units in the communication apparatus 1100 and the foregoing other operations and/or functions are separately intended to implement corresponding procedures of the methods shown in FIG. 4. FIG. 9, and FIG. 10.

Optionally, the communication apparatus 1100 may further include a processing unit 1110. The processing unit 1110 may be configured to process instructions or data, to implement a corresponding operation.

It should be further understood that when the communication apparatus 1100 is the chip disposed (or used) in the second node, the transceiver unit 1120 in the communication apparatus 1100 may be an input/output interface or circuit in the chip, and the processing unit 1110 in the communication apparatus 1100 may be a processor in the chip.

Optionally, the communication apparatus 1100 may further include a storage unit 1130. The storage unit 1130 may be configured to store instructions or data. The processing unit 1110 may execute the instructions or the data stored in the storage unit, to enable the communication apparatus to implement a corresponding operation.

It should be understood that, when the communication apparatus 1100 is the second node, the transceiver unit 1120 in the communication apparatus 1100 may be implemented through a communication interface (for example, a transceiver or an input/output interface), for example, may correspond to a transceiver 1310 in a network device 1300 shown in FIG. 13. The processing unit 1310 in the communication apparatus 1300 may be implemented by using at least one processor, for example, may correspond to a processor 1320 in the network device 1300 shown in FIG. 13. The processing unit 1110 in the communication apparatus 1100 may be implemented by using at least one logic circuit. The storage unit 1130 in the communication apparatus 1100 may correspond to a memory in the network device 1300 shown in FIG. 13.

It should be further understood that a specific process in which the units perform the foregoing corresponding steps is described in detail in the foregoing method. For brevity, details are not described herein again.

FIG. 12 is a diagram of a structure of a terminal device 1200 according to this disclosure. The terminal device 1200 may be used in the system shown in FIG. 1, to perform functions of the terminal device in the foregoing method. As shown in the figure, the terminal device 1200 includes a processor 1220 and a transceiver 1210. Optionally, the terminal device 1200 further includes a memory. The processor 1220, the transceiver 1210, and the memory may communicate with each other through an internal connection path, to transmit a control signal and/or a data signal. The memory is configured to store a computer program, and the processor 1220 is configured to execute the computer program in the memory, to control the transceiver 1210 to receive and send a signal.

The processor 1220 may be configured to perform an action that is implemented inside the terminal device and that is described in the foregoing methods. The transceiver 1210 may be configured to perform a sending action by the terminal device for the network device or a receiving operation from the network device in the foregoing methods. For details, refer to the descriptions in the foregoing methods. Details are not described herein again.

Optionally, the terminal device 1200 may further include a power supply, configured to supply power to various components or circuits in the terminal device.

FIG. 13 is a diagram of a structure of a network device 1300 according to this disclosure. The network device 1300 may be used in the system shown in FIG. 1, to perform functions of the second node in the foregoing methods. As shown in the figure, the network device 1300 includes a processor 1320 and a transceiver 1310. Optionally, the network device 1300 further includes a memory. The processor 1320, the transceiver 1310, and the memory may communicate with each other through an internal connection path, to transfer a control signal and/or a data signal. The memory is configured to store a computer program, and the processor 1320 is configured to execute the computer program in the memory, to control the transceiver 1310 to receive and send a signal.

The processor 1320 may be configured to perform an action that is implemented inside the network device and that is described in the foregoing methods. The transceiver 1310 may be configured to perform a sending action by the network device for the network device or a receiving operation from the network device in the foregoing methods. For details, refer to the descriptions in the foregoing methods. Details are not described herein again.

Optionally, the network device 1300 may further include a power supply, configured to supply power to various components or circuits in the network device.

In the terminal device shown in FIG. 12 and the network device shown in FIG. 13, the processor and the memory may be combined into one processing apparatus, and the processor is configured to execute program code stored in the memory to implement the foregoing functions. In specific implementation, the memory may be integrated into the processor, or independent of the processor. The processor may correspond to the processing unit in FIG. 11. The transceiver may correspond to the transceiver unit in FIG. 11. The transceiver 1210 may include a receiver (which is also referred to as a receiver machine or a receiver circuit) and a transmitter (which is also referred to as a transmitter machine or a transmitter circuit). The receiver is configured to receive a signal, and the transmitter is configured to transmit a signal.

In this disclosure, the processor may be a general-purpose processor, a digital signal processor, an application-specific integrated circuit, a field programmable gate array or another programmable logic device, a discrete gate or transistor logic device, or a discrete hardware component, and may implement or perform the methods, steps, and logical block diagrams in this disclosure. The general-purpose processor may be a microprocessor or any conventional processor or the like. The steps of the method in this disclosure may be directly implemented by a hardware processor, or may be implemented by a combination of hardware and a software module in a processor.

In this disclosure, the memory may be a non-volatile memory, for example, a hard disk drive (hard disk drive, HDD) or a solid-state drive (solid-state drive, SSD), or may be a volatile memory (volatile memory), such as a random-access memory (random-access memory, RAM). The memory is any other medium that can carry or store expected program code in a form of instructions or a data structure and that can be accessed by a computer, but is not limited thereto. The memory in this application may alternatively be a circuit or any other apparatus that can implement a storage function, and is configured to store the program instructions and/or the data.

This disclosure further provides a processing apparatus, and the processing apparatus includes a processor and a (communication) interface. The processor is configured to perform the method in any one of the foregoing methods.

It should be understood that the processing apparatus may be one or more chips. For example, the processing apparatus may be a field programmable gate array (field programmable gate array, FPGA), an application-specific integrated chip (application-specific integrated circuit, ASIC), a system on chip (system on chip, SoC), a central processing unit (central processing unit, CPU), a network processor (network processor, NP), a digital signal processing circuit (digital signal processor, DSP), a microcontroller (micro controller unit, MCU), a programmable controller (programmable logic device, PLD), or another integrated chip.

According to the methods provided in this disclosure, this disclosure further provides a computer program product. The computer program product includes computer program code. When the computer program code is executed by one or more processors, an apparatus including the processor is enabled to perform the methods shown in FIG. 4, FIG. 9, and FIG. 10.

All or a part of the technical solutions provided in this disclosure may be implemented by using software, hardware, firmware, or any combination thereof. When software is used to implement embodiments, all or a part of embodiments may be implemented in a form of a computer program product. The computer program product includes one or more computer instructions. When the computer program instructions are loaded and executed on the computer, the procedure or functions in the present invention are all or partially generated. The computer instructions may be stored in a computer-readable storage medium, or may be transmitted from one computer-readable storage medium to another computer-readable storage medium. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium, or the like.

According to the methods provided in this disclosure, this disclosure further provides a computer-readable storage medium. The computer-readable storage medium stores program code. When the program code is run by one or more processors, an apparatus including the processor is enabled to perform the methods shown in FIG. 4, FIG. 9, and FIG. 10.

According to the method provided in this disclosure, this disclosure further provides a system, including the foregoing one or more first apparatuses. The system may further include the foregoing one or more third apparatuses.

In several embodiments provided in this disclosure, it should be understood that the disclosed system, apparatus, and method may be implemented in other manners. For example, the described apparatus is an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Apart or all of the units may be selected based on actual requirements to achieve the objectives of the solutions of embodiments.

The foregoing descriptions are merely specific implementations of this disclosure, but are not intended to limit the protection scope of this disclosure. Any variation or replacement readily figured out by a person skilled in the art within the technical scope disclosed in this disclosure shall fall within the protection scope of this disclosure. Therefore, the protection scope of this disclosure shall be subject to the protection scope of the claims.

## Claims

1. A communication method, comprising:
receiving first information, wherein the first information indicates process parameter information of at least one time of clear channel assessment of a first node; and
sending second information, wherein the second information indicates a clear channel assessment policy of the first node, the clear channel assessment policy is obtained based on the first information, and the clear channel assessment policy comprises detection parameter information of the clear channel assessment.

2. The method according to claim 1, wherein the method further comprises:
obtaining the clear channel assessment policy through inference based on the first information.

3. The method according to claim 1, wherein the method further comprises:
sending the first information to a second node; and
receiving the second information from the second node.

4. The method according to any one of claims 1 to 3, wherein the process parameter information comprises one or more of the following parameters:
service priority information of a signal for triggering the clear channel assessment, a manner of the clear channel assessment, channel access priority information, contention window information, detection period information, an energy detection threshold, or detection result information.

5. The method according to any one of claims 1 to 4, wherein the clear channel assessment policy comprises detection parameter information of clear channel assessment corresponding to service priority information of at least one signal.

6. The method according to claim 5, wherein the clear channel assessment policy comprises one or more of the following:
service priority information of a signal for triggering the clear channel assessment, a manner of the clear channel assessment, channel access priority information, contention window information, detection period information, or an energy detection threshold.

7. The method according to any one of claims 1 to 6, wherein the first information further comprises transmission quality information, and the transmission quality information indicates quality of data transmitted by the first node on an unlicensed spectrum resource.

8. The method according to claim 7, wherein the transmission quality information indicates one or more of the following:
channel occupancy time of signal transmission, signal quality information, a proportion of signal transmission successes in a reference time period, a proportion of signal transmission failures in a reference time period, a first threshold, or information about a reference time period for assessing signal transmission quality, wherein
the first threshold is a threshold for assessing the signal transmission quality.

9. The method according to any one of claims 1 to 8, wherein the clear channel assessment policy further comprises one or more of the following:
information about a reference time period for assessing signal transmission quality, a first threshold, maximum channel occupancy time corresponding to the clear channel assessment, or transmission quality prediction information, wherein
the first threshold is a threshold for assessing the signal transmission quality.

10. The method according to any one of claims 1 to 9, wherein the receiving first information from a first node comprises:
periodically receiving the first information, wherein the at least one time of clear channel assessment is clear channel assessment performed by the first node in one periodicity.

11. A communication method, comprising:
sending first information, wherein the first information indicates process parameter information of at least one time of clear channel assessment of a first node; and
receiving second information, wherein the second information indicates a clear channel assessment policy of the first node, the clear channel assessment policy is obtained based on the first information, and the clear channel assessment policy comprises detection parameter information of the clear channel assessment.

12. The method according to claim 11, wherein the method further comprises:
performing clear channel assessment based on the clear channel assessment policy.

13. The method according to claim 11 or 12, wherein the process parameter information comprises one or more of the following parameters:
service priority information of a signal for triggering the clear channel assessment, a manner of the clear channel assessment, channel access priority information, contention window information, detection period information, an energy detection threshold, or detection result information.

14. The method according to any one of claims 11 to 13, wherein the clear channel assessment policy comprises detection parameter information of clear channel assessment corresponding to service priority information of at least one signal.

15. The method according to claim 14, wherein the clear channel assessment policy comprises one or more of the following:
service priority information of a signal for triggering the clear channel assessment, a manner of the clear channel assessment, channel access priority information, contention window information, detection period information, or an energy detection threshold.

16. The method according to any one of claims 11 to 15, wherein the first information further comprises transmission quality information, and the transmission quality information indicates quality of data transmitted by the first node on an unlicensed spectrum resource.

17. The method according to claim 16, wherein the transmission quality information indicates one or more of the following:
channel occupancy time of signal transmission, signal quality information, a proportion of signal transmission successes in a reference time period, a proportion of signal transmission failures in a reference time period, a first threshold, or information about a reference time period for assessing signal transmission quality, wherein
the first threshold is a threshold for assessing the signal transmission quality.

18. The method according to any one of claims 11 to 17, wherein the clear channel assessment policy further comprises one or more of the following:
information about a reference time period for assessing signal transmission quality, a first threshold, maximum channel occupancy time corresponding to the clear channel assessment, or transmission quality prediction information, wherein
the first threshold is a threshold for assessing the signal transmission quality.

19. The method according to any one of claims 11 to 18, wherein the sending first information comprises:
periodically sending the first information, wherein the at least one time of clear channel assessment is clear channel assessment performed by the first node in one periodicity.

20. A communication method, comprising:
receiving first information, wherein the first information indicates process parameter information of at least one time of clear channel assessment of a first node; and
training an intelligent model based on the first information.

21. The method according to claim 20, wherein the training an intelligent model based on the first information comprises:
inputting the first information into the intelligent model, to obtain a clear channel assessment policy that is output by the intelligent model;
obtaining an updated model parameter of the intelligent model based on the clear channel assessment policy; and
updating a parameter of the intelligent model based on the updated model parameter, to obtain an updated intelligent model.

22. The method according to claim 21, wherein the obtaining an updated model parameter of the intelligent model based on the clear channel assessment policy comprises:
obtaining model check information based on the clear channel assessment policy by using a loss function; and
if the model check information does not meet a preset condition, obtaining the updated model parameter based on the model check information.

23. The method according to any one of claims 20 to 22, wherein if the model check information meets the preset condition, a current intelligent model is used as a trained intelligent model.

24. A communication apparatus, comprising:
a transceiver unit, configured to receive first information, wherein the first information indicates process parameter information of at least one time of clear channel assessment of a first node; and
a processing unit, configured to determine second information, wherein the second information indicates a clear channel assessment policy of the first node, the clear channel assessment policy is obtained based on the first information, and the clear channel assessment policy comprises detection parameter information of the clear channel assessment, wherein
the transceiver unit is further configured to send the second information.

25. The apparatus according to claim 24, wherein the processing unit is further configured to obtain the clear channel assessment policy through inference based on the first information.

26. The apparatus according to claim 24, wherein the transceiver unit is further configured to:
send the first information to a second node; and
receive the second information from the second node.

27. The apparatus according to any one of claims 24 to 26, wherein the process parameter information comprises one or more of the following parameters:
service priority information of a signal for triggering the clear channel assessment, a manner of the clear channel assessment, channel access priority information, contention window information, detection period information, an energy detection threshold, or detection result information.

28. The apparatus according to any one of claims 24 to 27, wherein the clear channel assessment policy comprises detection parameter information of clear channel assessment corresponding to service priority information of at least one signal.

29. The apparatus according to claim 28, wherein the clear channel assessment policy comprises one or more of the following:
service priority information of a signal for triggering the clear channel assessment, a manner of the clear channel assessment, channel access priority information, contention window information, detection period information, or an energy detection threshold.

30. The apparatus according to any one of claims 24 to 29, wherein the first information further comprises transmission quality information, and the transmission quality information indicates quality of data transmitted by the first node on an unlicensed spectrum resource.

31. The apparatus according to claim 30, wherein the transmission quality information indicates one or more of the following:
channel occupancy time of signal transmission, signal quality information, a proportion of signal transmission successes in a reference time period, a proportion of signal transmission failures in a reference time period, a first threshold, or information about a reference time period for assessing signal transmission quality, wherein
the first threshold is a threshold for assessing the signal transmission quality.

32. The apparatus according to any one of claims 24 to 31, wherein the clear channel assessment policy further comprises one or more of the following:
information about a reference time period for assessing signal transmission quality, a first threshold, maximum channel occupancy time corresponding to the clear channel assessment, or transmission quality prediction information, wherein
the first threshold is a threshold for assessing the signal transmission quality.

33. The apparatus according to any one of claims 24 to 32, wherein the transceiver unit is specifically configured to periodically receive the first information, wherein the at least one time of clear channel assessment is clear channel assessment performed by the first node in one periodicity.

34. A communication apparatus, comprising:
a processing unit, configured to determine first information, wherein the first information indicates process parameter information of at least one time of clear channel assessment of a first node; and
a transceiver unit, configured to send the first information, wherein
the transceiver unit is further configured to receive second information, wherein the second information indicates a clear channel assessment policy of the first node, the clear channel assessment policy is obtained based on the first information, and the clear channel assessment policy comprises detection parameter information of the clear channel assessment.

35. The apparatus according to claim 34, wherein the processing unit is further configured to perform clear channel assessment based on the clear channel assessment policy.

36. The apparatus according to claim 34 or 35, wherein the process parameter information comprises one or more of the following parameters:
service priority information of a signal for triggering the clear channel assessment, a manner of the clear channel assessment, channel access priority information, contention window information, detection period information, an energy detection threshold, or detection result information.

37. The apparatus according to any one of claims 34 to 36, wherein the clear channel assessment policy comprises detection parameter information of clear channel assessment corresponding to service priority information of at least one signal.

38. The apparatus according to claim 37, wherein the clear channel assessment policy comprises one or more of the following:
service priority information of a signal for triggering the clear channel assessment, a manner of the clear channel assessment, channel access priority information, contention window information, detection period information, or an energy detection threshold.

39. The apparatus according to any one of claims 34 to 38, wherein the first information further comprises transmission quality information, and the transmission quality information indicates quality of data transmitted by the first node on an unlicensed spectrum resource.

40. The apparatus according to claim 39, wherein the transmission quality information indicates one or more of the following:
channel occupancy time of signal transmission, signal quality information, a proportion of signal transmission successes in a reference time period, a proportion of signal transmission failures in a reference time period, a first threshold, or information about a reference time period for assessing signal transmission quality, wherein
the first threshold is a threshold for assessing the signal transmission quality.

41. The apparatus according to any one of claims 34 to 40, wherein the clear channel assessment policy further comprises one or more of the following:
information about a reference time period for assessing signal transmission quality, a first threshold, maximum channel occupancy time corresponding to the clear channel assessment, or transmission quality prediction information, wherein
the first threshold is a threshold for assessing the signal transmission quality.

42. The apparatus according to any one of claims 34 to 41, wherein the transceiver unit is specifically configured to periodically send the first information, wherein the at least one time of clear channel assessment is clear channel assessment performed by the first node in one periodicity.

43. A communication apparatus, comprising:
a transceiver unit, configured to receive first information, wherein the first information indicates process parameter information of at least one time of clear channel assessment of a first node; and
a processing unit, configured to train an intelligent model based on the first information.

44. The apparatus according to claim 43, wherein the processing unit is specifically configured to:
input the first information into the intelligent model, to obtain a clear channel assessment policy that is output by the intelligent model;
obtain an updated model parameter of the intelligent model based on the clear channel assessment policy; and
update a parameter of the intelligent model based on the updated model parameter, to obtain an updated intelligent model.

45. The apparatus according to claim 44, wherein the processing unit is specifically configured to:
obtain model check information based on the clear channel assessment policy by using a loss function; and
if the model check information does not meet a preset condition, obtain the updated model parameter based on the model check information.

46. The apparatus according to any one of claims 43 to 45, wherein if the model check information meets the preset condition, a current intelligent model is used as a trained intelligent model.

47. A communication apparatus, comprising a processor and a memory, wherein the memory is coupled to the processor, and the processor is configured to perform the method according to any one of claims 1 to 10, or configured to perform the method according to any one of claims 20 to 23.

48. A communication apparatus, comprising a processor and a communication interface, wherein the processor performs, through the communication interface, the method according to any one of claims 1 to 10 or the method according to any one of claims 20 to 23.

49. A communication apparatus, comprising a processor and a memory, wherein the memory is coupled to the processor, and the processor is configured to perform the method according to any one of claims 11 to 19.

50. A communication apparatus, comprising a processor and a communication interface, wherein the processor performs, through the communication interface, the method according to any one of claims 11 to 19.

51. A communication system, comprising the communication apparatus according to any one of claims 20 to 22 and the communication apparatus according to any one of claims 23 to 25.

52. A computer-readable storage medium, storing instructions, wherein when the instructions are run on a computer, the computer is enabled to perform the method according to any one of claims 1 to 23.

53. A computer program product, comprising instructions, wherein when the instructions are run on a computer, the computer is enabled to perform the method according to any one of claims 1 to 23.
